(19) Europäisches Patentamt
European Patent Office
Office européen des brevets

(11) Publication number: 0 567 603 B1

## EUROPEAN PATENT SPECIFICATION

(45) Date of publication of patent specification: **13.12.95**　(51) Int. Cl.[6]: **C04B 41/53**

(21) Application number: **92913659.6**

(22) Date of filing: **16.01.92**

(86) International application number:
**PCT/US92/00391**

(87) International publication number:
**WO 92/13689 (20.08.92 92/22)**

(54) **REMOVING METAL FROM COMPOSITE BODIES, AND RESULTING PRODUCTS**

(30) Priority: **16.01.91 US 642267**

(43) Date of publication of application:
**03.11.93 Bulletin 93/44**

(45) Publication of the grant of the patent:
**13.12.95 Bulletin 95/50**

(84) Designated Contracting States:
**BE CH DE FR GB IT LI LU**

(56) References cited:
**WO-A-92/00939
DD-A- 279 464
DD-A- 279 468
US-A- 4 874 569**

(73) Proprietor: **LANXIDE TECHNOLOGY COM-PANY, LP
1300 Marrows Road,
P.O.Box 6077
Newark,
DE 19714-6077 (US)**

(72) Inventor: **SONUPARLAK, Birol
20 Danvers Circle
Newark, DE 19702 (US)**
Inventor: **JOHNSON, William, Bayard
14 Brookbridge Lane
Newark, DE 19711 (US)**
Inventor: **FAREED, Ali, Syed
4704 Weatherhill Drive
Wilmington, DE 19808 (US)**

(74) Representative: **Andrae, Steffen, Dr. et al
DENNEMEYER & ASSOCIATES
Balanstrasse 55
D-81541 München (DE)**

EP 0 567 603 B1

**Description**

Technical Field

The present invention relates to a novel process for removing metal from composite bodies. Particularly, a composite body which comprises at least one metal component within a metallic constituent, which is at least partially accessible, or can be made to be at least partially accessible, from at least one surface thereof, may be subjected to the methods of the present invention to remove at least a portion, or substantially all, of the metallic constituent from the composite body. The metallic constituent, or at least a metal component of the metallic constituent, may be removed without the requirement for the application of any pressure or vacuum.

Background Art

Composite products (e.g., ceramic reinforced metals and metal reinforced ceramics) comprising a metallic constituent and a second component, such as a strengthening or reinforcing phase (e.g., ceramic particulates, whiskers, fibers or the like) show great promise for a variety of applications. However, in some cases a metallic constituent, or at least one metallic component of the metallic constituent, in a composite body may prevent the composite body from being used in some industrial applications. For example, if a composite body contained an aluminum component as, or in, the metallic constituent, and also contained a ceramic phase or component, the aluminum component, if present in substantial amounts, could prohibit the composite body from being utilized in, for example, certain high temperature applications, certain corrosive environments, certain erosive environments, etc. Thus, in some cases, it may be desirable to remove at least a portion, or substantially all, of a particular component in the metallic constituent or the metallic constituent itself from the composite body.

Various methods for removing a metallic constituent from a composite body are known in the art. Specifically, the general knowledge that a metallic constituent can be leached from a composite body exists. Moreover, the general knowledge that the simultaneous application of temperature and some type of mechanically applied pressure to remove a metallic constituent from a composite body also exists. However, these methods have drawbacks associated with them. For example, the simultaneous application of temperature and pressure could have a deleterious effect upon the microstructure of the composite body. Moreover, the shape of the composite body could be adversely affected if a large amount of pressure was applied. Likewise, subjecting a composite body to a leaching step could also have deleterious effects upon the microstructure (or macrostructure) of the composite body. Still further, these processes may not reliably remove substantial portions of a metallic constituent unless long amounts of time and/or relatively high temperatures are provided for metallic constituent removal. Moreover, such methods may not be capable of selectively removing one or more metallic components within a metallic constituent.

Accordingly, there has been a long felt need for a simple and reliable process to remove from certain composite bodies some or all of a metallic component of a metallic constituent, as well as removing some or all of the metallic constituent itself, said process not relying upon the use of applied pressure or vacuum (whether externally applied or internally created). The present invention satisfies these and other needs by providing a technique for the removal of at least a portion, or substantially all, of a metallic constituent from a composite body, without the requirement for the application of pressure, etc. Moreover, the present invention provides a technique for the selected removal of at least one metallic component of a metallic constituent and/or selected areas of removal of at least one metallic component of a metallic constituent from the composite body.

Description of Commonly Owned U.S. Patents and U.S. Patent Applications

This application is a continuation-in-part of commonly owned U.S. Patent Application Serial No. 07/642,267, filed January 16, 1991, which is a continuation-in-part of US Patent Application Serial No. 07/443,265, filed November 29, 1989, in the names of Birol Sonuparlak et al., and entitled "A Method of Removing Metal From Composite Bodies and Products Produced Thereby".

The subject matter of this application is somewhat related to the subject matter contained in several other commonly owned copending patent applications. Specifically, the concept of spontaneous infiltration to form a metal matrix composite body has been disclosed in a number of commonly owned patent applications, the most relevant of which are discussed below herein.

2

A novel method for forming metal matrix composite bodies is disclosed in commonly owned U.S. Patent Application Serial No. 07/521,043, filed May 9, 1990, which is a continuation-in-part of U.S. Patent Application Serial No. 07/484,753, filed February 23, 1990, which is a continuation-in-part of U.S. Patent Application Serial No. 07/432,661, filed November 7, 1989, which is continuation-in-part of U.S. Patent Application Serial No. 07/416,327, filed October 6, 1989, which in turn is a continuation-in-part of U.S. Patent Application Serial No. 07/349,590, filed May 9, 1989, which in turn is a continuation-in-part of U.S. Serial No. 07/269,311, filed November 10, 1988, all of which were filed in the names of Aghajanian et al., and all of which were entitled "A Method of Forming Metal Matrix Composite Bodies by a Spontaneous Infiltration Process, and Products Produced Therefrom".

Under the process conditions disclosed in the aforementioned Aghajanian et al., applications, a metal matrix composite body is produced by spontaneously infiltrating (i.e., infiltrating without the requirement of pressure, whether externally applied or internally created) a permeable mass of filler material or a preform with a molten matrix metal. Specifically, an infiltration enhancer and/or an infiltration enhancer precursor and/or an infiltrating atmosphere are in communication with the filler material or preform, at least at some point during the process, which permits molten matrix metal to spontaneously infiltrate the filler material or preform.

In a first preferred embodiment, a precursor to an infiltration enhancer may be supplied to at least one of a filler material or preform, and/or a matrix metal, and/or an infiltrating atmosphere. The supplied infiltration enhancer precursor may thereafter react with at least one constituent in the filler material or preform, and/or the matrix metal, and/or the infiltrating atmosphere to produce infiltration enhancer in at least a portion of, or on, the filler material or preform. Ultimately, at least during the spontaneous infiltration, infiltration enhancer should be in contact with at least a portion of the filler material or preform.

In another preferred embodiment of the Aghajanian et al., invention, rather than supplying an infiltration enhancer precursor, an infiltration enhancer may be supplied directly to at least one of the filler material or preform, and/or matrix metal, and/or infiltrating atmosphere. Ultimately, at least during the spontaneous infiltration, the infiltration enhancer should be in contact with at least a portion of the filler material or preform.

These Aghajanian et al., applications disclose numerous examples of matrix metals, which at some point during the formation of a metal matrix composite, may be contacted with an infiltration enhancer precursor, in the presence of an infiltrating atmosphere. Thus, various references were made in the aforementioned applications to particular matrix metal/infiltration enhancer precursor/infiltrating atmosphere systems which exhibit spontaneous infiltration. However, as stated in these Aghajanian et al., applications, it is conceivable that many other matrix metal/infiltration enhancer precursor/infiltrating atmosphere systems other than those discussed in the applications may behave in a manner similar to the systems expressly discussed therein. Specifically, spontaneous infiltration behavior has been observed in the aluminum/magnesium/nitrogen system; the aluminum/strontium/nitrogen system; the aluminum/zinc/oxygen system; and the aluminum/calcium/nitrogen system. Accordingly, even though the Aghajanian et al., applications discuss only those systems referred to above herein, Aghajanian et al., state that it should be understood that other matrix metal/infiltration enhancer precursor/infiltrating atmosphere systems may behave in a similar manner.

In a preferred embodiment for achieving spontaneous infiltration into a permeable mass of filler material or a preform, molten matrix metal is contacted with the preform or filler material. The preform or filler material may have admixed therewith, and/or at some point during the process, be exposed to, an infiltration enhancer precursor. Moreover, in a preferred embodiment, the molten matrix metal, and/or preform or filler material, communicate with an infiltrating atmosphere for at least a portion of the process. In another preferred embodiment, the matrix metal, and/or preform or filler material, communicate with an infiltrating atmosphere for substantially all of the process. The preform or filler material will be spontaneously infiltrated by molten matrix metal, and the extent or rate of spontaneous infiltration and formation of metal matrix composite will vary with a given set of processing conditions including, for example, the concentration of infiltration enhancer precursor provided to the system (e.g., in the molten matrix alloy and/or in the filler material or preform and/or in the infiltrating atmosphere), the size and/or composition of the filler material, the size and/or composition of particles in the filler material or preform, the available porosity for infiltration into the preform or filler material, the time permitted for infiltration to occur, and/or the temperature at which infiltration occurs. Spontaneous infiltration typically occurs to an extent sufficient to embed substantially completely the preform or filler material.

The subject matter of this application is also related to that of several commonly owned ceramic and ceramic composite Patents and commonly owned and copending ceramic and ceramic composite Patent Applications. Particularly, these Patents and Patent Applications describe novel methods for making ceramic and ceramic matrix composite materials (hereinafter sometimes referred to as "Commonly Owned Ceramic Matrix Patent Applications and Patents").

A novel approach to the formation of ceramic materials is disclosed generically in Commonly Owned U.S. Patent No. 4,713,360, which issued on December 15, 1987, in the names of Marc S. Newkirk et al. and entitled "Novel Ceramic Materials and Methods for Making Same". This Patent discloses a method of producing self-supporting ceramic bodies grown as the oxidation reaction product of a molten parent precursor metal which is reacted with a vapor-phase oxidant to form an oxidation reaction product. Molten metal migrates through the formed oxidation reaction product to react with the oxidant thereby continuously developing a ceramic polycrystalline body which can, if desired, include an interconnected metallic component. The process may be enhanced by the use of one or more dopants alloyed with the parent metal. For example, in the case of oxidizing aluminum in air, it is desirable to alloy magnesium and silicon with the aluminum to produce alpha-alumina ceramic structures. This method was improved upon by the application of dopant materials to the surface of the parent metal, as described in Commonly Owned U.S. Patent No. 4,853,352, which issued on August 1, 1989, in the names of Marc S. Newkirk et al., and entitled "Methods of Making Self-Supporting Ceramic Materials", a European counterpart to which was published in the EPO on January 22, 1986.

A novel method for producing a self-supporting ceramic composite by growing an oxidation reaction product form a parent metal into a permeable mass of filler is disclosed in commonly owned and copending U.S. Patent Application Serial No. 07/433,733, filed November 30, 1989, and entitled "Method of Making Composite Articles Having Embedded Filler", which is a continuation-in-part of commonly owned and copending U.S. Patent Application Serial No. 07/415,180, filed September 29, 1989, which is a divisional U.S. Patent No. 4,916,113, issued April 10, 1990, and entitled "Methods of Making Composite Articles Having Embedded Filler" which is a continuation of U.S. Patent No. 4,851,375, issued July 25, 1989, and entitled "Composite Ceramic Articles and Methods of Making the Same" all in the names of Marc S. Newkirk, et al.

A method for producing ceramic composite bodies having a predetermined geometry or shape is disclosed in Commonly Owned and Copending U.S. Patent Application Serial No. 07/338,471, filed April 14, 1989 (and now allowed), which is a continuation of U.S. Application Serial No. 06/861,025, filed May 8, 1986 (and now abandoned), both in the names of Marc S. Newkirk et al., a European counterpart to which was published in the EPO on January 22, 1986. In accordance with the method in this U.S. Patent Application, the developing oxidation reaction product infiltrates a permeable preform of filler material in a direction towards a defined surface boundary. It was discovered that high fidelity is more readily achieved by providing the preform with a barrier means, as disclosed in Commonly Owned U.S. Patent Application Serial No. 07/295,488, filed January 10, 1989, which is a continuation of U.S. Patent No. 4,923,832, which issued May 8, 1990, both in the names of Marc S. Newkirk et al., a European counterpart to which was published in the EPO on November 11, 1987. This method produces shaped self-supporting ceramic bodies, including shaped ceramic composites, by growing the oxidation reaction product of a parent metal to a barrier means spaced from the metal for establishing a boundary or surface.

Ceramic composites having a cavity with an interior geometry inversely replicating the shape of a positive mold or pattern are disclosed in Commonly Owned U.S. Patent Application Serial No. 07/329,794, filed March 28, 1989 (and now allowed), which is a divisional of U.S. Patent No. 4,828,785, which issued May 9, 1989, both in the names of Marc S. Newkirk, et al., a European counterpart to which was published in the EPO on September 2, 1987, and in U.S. Patent No. 4,859,640, which issued on August 22, 1989, a European counterpart to which was published in the EPO on March 9, 1988.

The feeding of additional molten parent metal from a reservoir has been successfully utilized to produce thick ceramic matrix composite structures. Particularly, as disclosed in Commonly Owned U.S. Patent No. 4,918,034, issued April 17, 1990, which is a continuation-in-part of U.S. Patent No. 4,900,699, issued February 13, 1990, both in the names of Marc S. Newkirk et al., and entitled "Reservoir Feed Method of Making Ceramic Composite Structures and Structures Made Thereby", a European counterpart to which was published in the EPO on March 30, 1988, the reservoir feed method has been successfully applied to form ceramic matrix composite structures. According to the method of this Newkirk et al. invention, the ceramic or ceramic composite body which is produced comprises a self-supporting ceramic composite structure which includes a ceramic matrix obtained by the oxidation reaction of a parent metal with an oxidant to form a polycrystalline material. In conducting the process, a body of the parent metal and a permeable filler are oriented relative to each other so that formation of the oxidation reaction product will occur in a direction toward and into the filler. The parent metal is described as being present as a first source and as a reservoir, the reservoir of metal communicating with the first source due to, for example, gravity flow. The first source of molten parent metal reacts with the oxidant to begin the formation of the

4

oxidation reaction product. As the first source of molten parent metal is consumed, it is replenished, preferably by a continuous means, from the reservoir of parent metal as the oxidation reaction product continues to be produced and infiltrates the filler. Thus, the reservoir assures that ample parent metal will be available to continue the process until the oxidation reaction product has grown to a desired extent.

A method for tailoring the constituency of the metallic component of a ceramic matrix composite structure is disclosed in Copending and Commonly Owned U.S. Patent Application Serial No. 07/389,506, filed on August 2, 1989, which in turn is a continuation of U.S. Patent Application Serial No. 06/908,454, filed September 17, 1986 (and now abandoned), both of which are in the names of Marc S. Newkirk et al., and entitled "Method for In Situ Tailoring the Metallic Component of Ceramic Articles and Articles Made Thereby".

Moreover, U.S. Patent Application Serial No. 07/269,152, filed November 9, 1988, which is a continuation of U.S. Patent Application Serial No. 07/152,518 (which issued as U.S. Patent No. 4,818,734, issued April 4, 1989), in the names of Robert C. Kantner et al., which was a Continuation-in-Part Application of the above-mentioned Serial No. 06/908,454, having the same title and also being Commonly Owned. This Patent and the above-mentioned application 06/908,454, disclose methods for tailoring the constituency of the metallic component (both isolated and interconnected) of ceramic and ceramic matrix composite bodies during formation thereof to impart one or more desirable characteristics to the resulting body. Thus, desired performance characteristics for the ceramic or ceramic composite body are advantageously achieved by incorporating the desired metallic component in situ, rather than from an extrinsic source, or by post-forming techniques.

As discussed in these Commonly Owned Ceramic Matrix Patent Applications and Patents, novel polycrystalline ceramic materials or polycrystalline ceramic composite materials are produced by the oxidation reaction between a parent metal and an oxidant (e.g., a solid, liquid and/or a gas). In accordance with the generic process disclosed in these Commonly Owned Ceramic Matrix Patent Applications and Patents, a parent metal (e.g., aluminum) is heated to an elevated temperature above its melting point but below the melting point of the oxidation reaction product (e.g., aluminum nitride) to form a body of molten parent metal which reacts upon contact with an oxidant (e.g., a nitrogenous atmosphere) to form the oxidation reaction product. At this temperature, the oxidation reaction product, or at least a portion thereof, is in contact with and extends between the body of molten parent metal and the oxidant, and molten metal is drawn or transported through the formed oxidation reaction product and towards the oxidant. The transported molten metal forms additional fresh oxidation reaction product when contacted with the oxidant, at the surface of previously formed oxidation reaction product. As the process continues, additional metal is transported through this formation of polycrystalline oxidation reaction product thereby continually "growing" a ceramic structure of interconnected crystallites. The resulting ceramic body may contain metallic constituents, such as non-oxidized constituents of the parent metal, and/or voids. Oxidation is used in its broad sense in all of the Commonly Owned Ceramic Matrix Patent Applications and Patents and in this application, and refers to the loss or sharing of electrons by a metal to an oxidant which may be one or more elements and/or compounds. Accordingly, elements other than oxygen may serve as an oxidant.

In certain cases, the parent metal may require the presence of one or more dopants in order to influence favorably or to facilitate growth of the oxidation reaction product. Such dopants may at least partially alloy with the parent metal at some point during or prior to growth of the oxidation reaction product. For example, in the case of aluminum as the parent metal and nitrogen as the oxidant, dopants such as strontium, silicon, nickel and magnesium, to name but a few of a larger class of dopant materials, can be alloyed with aluminum, and the created growth alloy is utilized as the parent metal. The resulting oxidation reaction product of such a growth alloy, in the case of using nitrogen as an oxidant, comprises aluminum nitride.

Novel ceramic composite structures and methods of making the same are also disclosed and claimed in certain of the aforesaid Commonly Owned Ceramic Matrix Patent Applications and Patents which utilize the oxidation reaction to produce ceramic composite structures comprising a substantially inert filler (note: in some cases it may be desirable to use a reactive filler, e.g., a filler which is at least partially reactive with the advancing oxidation reaction product and/or parent metal) infiltrated by the polycrystalline ceramic matrix. A parent metal is positioned adjacent to a mass of permeable filler (or a preform) which can be shaped and treated to be self-supporting, and is then heated to form a body of molten parent metal which is reacted with an oxidant, as described above, to form an oxidation reaction product. As the oxidation reaction product grows and infiltrates the adjacent filler material, molten parent metal is drawn through previously formed oxidation reaction product within the mass of filler and reacts with the oxidant to form additional fresh oxidation reaction product at the surface of the previously formed oxidation reaction product, as described above. The resulting growth of oxidation reaction product infiltrates or embeds the filler and results in the formation of a ceramic composite structure of a polycrystalline ceramic matrix embedding the filler. As also discussed above, the filler (or preform) may utilize a barrier means to establish a boundary or surface for the ceramic composite structure.

Novel processing techniques, and the novel bodies which are produced thereby, are disclosed in Copending and Commonly Owned U.S. Patent Application Serial No. 07/414,198, filed on September 28, 1989, which in turn is a continuation of U.S. Patent No. 4,874,569, which issued on October 17, 1989, both of which are in the names of Jack A. Kuszyk et al., and are entitled "Ceramic Composite and Methods of Making The Same." This patent and patent application disclose the importance of utilizing an aluminium parent metal alloy containing at least about 1 weight percent zinc for the formation of ceramic composite bodies which are used as refractory bodies.

Thus, the aforesaid Commonly Owned Ceramic Matrix Patent Applications and Patents describe the production of oxidation reaction products which are readily grown to desired sizes and thicknesses heretofore believed to be difficult, if not impossible, to achieve with conventional ceramic processing techniques.

## Summary of the Invention

A metallic constituent of a composite body can be at least partially, or substantially completely, removed by causing at least one metallic component of the metallic constituent to spontaneously infiltrate an adjacent permeable mass of filler material or a preform. To achieve such spontaneous infiltration, at least a portion of the permeable mass is placed into contact with at least a portion of the metallic constituent contained within the composite body. Thus, at least a portion of the metallic constituent should be at least partially accessible, or can be made to be at least partially accessible, from at least one surface of the composite body.

Specifically, an infiltration enhancer and/or an infiltration enhancer precursor and/or an infiltrating atmosphere are in communication with the filler material or preform, at least at some point during the process, which permits the at least one metallic component of the metallic constituent of a composite body, when made molten, to spontaneously infiltrate at least a portion of the contacted filler material or preform. In a first preferred embodiment, a precursor to an infiltration enhancer may be supplied to at least one of, a portion of at least one surface of the composite body, and/or diffused into at least a portion of the metallic constituent of the composite body, and/or mixed into at least a portion of the filler material or preform which is placed into contact with at least a portion of the composite body, and/or contained in an infiltrating atmosphere. The supplied infiltration enhancer precursor may thereafter react with at least one of a component in the filler material or preform, and/or at least one metallic component in the metallic constituent of the composite body, and/or the infiltrating atmosphere, thereby producing infiltration enhancer in at least a portion of, or on at least a portion of, the filler material or preform, which in turn is in contact with at least a portion of at least one surface of the composite body. Ultimately, at least during the spontaneous infiltration, infiltration enhancer should be in contact with at least a portion of the filler material or preform.

In another preferred embodiment of the invention, rather than supplying an infiltration enhancer precursor, an infiltration enhancer may be supplied directly to at least one of the filler material or preform, and/or metallic constituent of the composite body, and/or infiltrating atmosphere. Ultimately, at least during the spontaneous infiltration, the infiltration enhancer should be in contact with at least a portion of the filler material or preform which, in turn, is in contact with at least a portion of the surface of the composite body.

In any of the above-discussed preferred embodiments, the presence of infiltration enhancer and/or infiltration enhancer precursor in or on at least a portion of the filler material or preform may cause at least one metallic component of the metallic constituent, or substantially all of the metallic constituent of the composite body, to spontaneously infiltrate at least a portion of the filler material or preform. The amount of or selected portion of metallic constituent which is caused to spontaneously infiltrate the filler material or preform can be controlled to achieve desirable metal removal. Specifically, substantially all metallic constituent located in a certain area within a composite body (e.g., located near a surface of the composite body) may be completely removed from that selected area thereby leaving other areas of metallic constituent within the composite body substantially undisturbed. Moreover, if the metallic constituent is substantially interconnected throughout the composite body, substantially all of the metallic constituent could be removed. The volumetric amount of metallic constituent to be removed from the composite body depends upon the ultimate application for the composite body. Thus, the present invention may be utilized merely as a surface modification process for composite products, or it could be used to remove substantially all of a metallic constituent from composite products.

Still further, selected portions of the metallic constituent could be separately removed, leaving behind substantially undisturbed residual metallic constituent. Specifically, one or more metallic components of a multi-phase metallic constituent could be removed from selected areas of a composite body or could be removed substantially uniformly from the composite body, depending upon the ultimate application for the composite body. Such selected removal of one or more metallic components of a multi-phase metallic constituent could occur, for example, due to operating at a temperature range within which only said one or more metallic components were molten and thus were the only components that were involved in the spontaneous infiltration (i.e., metal removal process). However, for example, if the temperature was increased to a range within which all components of the multi-phase metallic constituent were rendered molten, then the entire multi-phase metallic constituent may be removable from the composite body. Selective removal of at least one component from the multi-phase metallic constituent could provide for a grading, either slight or substantial, of the microstructure of a composite body, thus resulting in graded properties of the composite body.

In another preferred embodiment for removing at least one metallic component of a metallic constituent from at least a portion of a composite body, the composite body may be substantially completely surrounded by and contacted with a filler material or preform. In this embodiment, spontaneous infiltration of the filler material or preform by at least a portion, or substantially all, of the metallic constituent could be achieved from substantially all surfaces of the composite body, so long as the metallic constituent is at least partially accessible, or could be made to be at least partially accessible, from such surfaces.

In another preferred embodiment for removing at least one metallic component of a metallic constituent from a composite body, only a portion of the composite body may be contacted with a permeable mass of filler material or preform. In this preferred embodiment, at least one metallic component of the metallic constituent could be selectively removed from that surface which is in contact with the permeable mass. In this preferred embodiment, a grading of the properties of the composite body may be achieved by varying the volume percent of metallic constituent present from, for example, one side of the composite body to an opposite side of the composite body. Thus, this grading of volume percent of metallic constituent within a composite body could permit the composite body to be utilized for a number of different conventional applications. Still further, by contacting only a portion of a composite body with a filler material or preform, any surface irregularities which may result from the removal of metallic constituent from a composite body can be substantially confined to that portion of the composite body which contacts the filler material or preform.

In another preferred embodiment, the amount of infiltration enhancer and/or infiltration enhancer precursor which is supplied to, for example, the filler material or preform, can be varied from one point in the filler material or preform to another point. Specifically, the amount of spontaneous infiltration of at least one metallic component of the metallic constituent in the composite body into an adjacent filler material or preform may be controlled by controlling the amount of infiltration enhancer and/or infiltration enhancer precursor provided in the filler material or preform. Thus, for example, by supplying a greater amount of infiltration enhancer precursor and/or infiltration enhancer to one side of a composite body relative to a different side of a composite body, the rate and/or amount of spontaneous infiltration of at least one metallic component of the metallic constituent in the composite body can be selectively controlled. Likewise, by controlling the type, pressure, location, etc. of infiltrating atmosphere supplied to, for example, different portions of the filler material or preform which are in contact with the metallic constituent of the composite body, the amount of spontaneous infiltration and/or rate of spontaneous infiltration can also be selectively controlled. Similarly, metal-removal can also be controlled by exposing composite bodies to static or non-flowing atmospheres, or by exposing composite bodies to flowing atmospheres. For example, the amounts of metal removal may differ when static atmospheres are utilized in contrast to utilization of flowing atmospheres. Still further, by controlling the temperature of different portions of the filler material or preform and/or composite body, the amount of spontaneous infiltration can also be selectively controlled.

In some situations, it is possible to predetermine the amount of infiltration enhancer and/or infiltration enhancer precursor which may be required to be present in a metallic constituent of a ceramic reinforced metal composite body or in a metal reinforced ceramic composite body. Accordingly, a composite body can be manufactured so as to contain a requisite amount of infiltration enhancer and/or infiltration enhancer precursor.

This application discloses specific examples directed to aluminum metal components of metallic constituent contained within aluminum reinforced ceramic composite bodies and ceramic reinforced aluminum composite bodies. However, it should be understood that virtually any metallic component of a metallic constituent contained within a composite body can be at least partially, or substantially completely, removed from the composite body, so long as the mechanisms of the present invention are followed. Thus, even though this application focuses primarily upon aluminum metallic components of metallic constituents contained within composite bodies, it should be understood that any metallic component contained within any composite body, whether the composite body comprises a two-phase composite body or, for example, comprises a ten-phase composite body, the metallic component of multi-phase bodies may behave in a similar manner to those metallic components disclosed in the Examples herein.

Of particular interest in this disclosure is the removal of aluminum metal component(s) of metallic constituent(s) contained within fiber reinforced ceramic composite bodies, wherein the fiber reinforcement is coated by a plurality (e.g., two or more) of superimposed coatings thereon. Specifically, fiber reinforcements comprising silicon carbide, silicon carbide-based materials, carbon, alumina and alumina-based materials, can be coated by, for example, chemical vapor infiltration techniques. When such chemical vapor infiltration techniques are utilized, desirable coating combinations for silicon carbide and silicon carbide-based materials include boron nitride/silicon carbide or titanium carbide/silicon nitride or carbon/silicon carbide. When the fiber reinforcement comprises carbon fibers, desirable coating combinations include carbon/silicon carbide. Finally, when the fiber reinforcement comprises an alumina or aluminum-based fiber, desirable coating combination include iridium/silicon carbide or niobium/silicon carbide, platinum/silicon carbide or platinum/boron nitride/silicon carbide.

Further, when the above-discussed fiber reinforcements are utilized as reinforcements in ceramic composite bodies made by the directed oxidation of a parent metal and the resultant bodies are subjected to metal removal techniques of the invention, very desirable bodies can be manufactured.

Definitions

"Aluminum", as used herein, means and includes essentially pure metal (e.g., a relatively pure, commercially available unalloyed aluminum) or other grades of metal and metal alloys such as the commercially available metals having impurities and/or alloying constituents such as iron, silicon, copper, magnesium, manganese, chromium, zinc, etc., therein. An aluminum alloy for purposes of this definition is an alloy or intermetallic compound in which aluminum is the major chemical constituent.

"Balance Non-Oxidizing Gas", as used herein, means that any gas present in addition to the primary gas comprising the infiltrating atmosphere, is either an inert gas or a reducing gas which is substantially non-reactive with the metallic constituent under the process conditions. Any oxidizing gas which may be present as an impurity in the gas(es) used should be insufficient to oxidize the metallic constituent to any substantial extent under the process conditions.

"Barrier" or "barrier means", as used herein, means any suitable means which interferes, inhibits, prevents or terminates the migration, movement, or the like, of molten metallic constituent or at least a metal component of metallic constituent beyond a surface boundary of a permeable mass of filler material or preform, where such surface boundary is defined by said barrier means. Suitable barrier means may be any such material, compound, element, composition, or the like, which, under the process conditions, maintains some integrity and is not substantially volatile (i.e., the barrier material does not volatilize to such an extent that it is rendered non-functional as a barrier).

Further, suitable "barrier means" includes materials which are substantially non-wettable by the migrating molten metallic constituent or at least a migrating molten component of the metallic constituent under the process conditions employed. A barrier of this type appears to exhibit substantially little or no affinity for the molten metallic constituent or at least a molten component of the metallic constituent, and movement beyond the defined surface boundary of the mass of filler material or preform is prevented or inhibited by the barrier means. The barrier may in certain cases be permeable or porous, or rendered permeable by, for example, drilling holes or puncturing the barrier, to permit a gaseous atmosphere to contact the molten matrix metal, etc.

"Ceramic", as used herein, should not be unduly construed as being limited to a ceramic body in the classical sense, that is, in the sense that it consists entirely of non-metallic and inorganic materials, but rather refers to a body which is predominantly ceramic with respect to either composition or dominant properties, although the body may contain minor or substantial amounts of one or more metallic constituents (isolated and/or interconnected, depending on the processing conditions used to form the body) derived from the parent metal, or reduced from the oxidant or a dopant, most typically within a range of from about 1-40 percent by volume, but may include still more metal.

"Ceramic Matrix Composite" or "CMC" or "Ceramic Composite Body", as used herein, means a material comprising a two- or three-dimensionally interconnected ceramic which has embedded a preform or filler material, and may further include a metallic constituent embedded therein, possibly in a two- or three-dimensionally interconnected network. The ceramic may include various dopant elements to provide a specifically desired microstructure, or specifically desired mechanical, physical, or chemical properties in the resulting composite.

"Dopants", as used herein, means materials (parent metal constituents or constituents combined with and/or included in or on a filler, or combined with the oxidant) which, when used in combination with the parent metal, favorably influence or promote the oxidation reaction process and/or modify the growth process to alter the microstructure and/or properties of the product. While not wishing to be bound by any particular theory or explanation of the function of dopants, it appears that some dopants are useful in promoting oxidation reaction product formation in cases where appropriate surface energy relationships between the parent metal and its oxidation reaction product do not intrinsically exist so as to promote such formation. Dopants may be added to the filler material, they may be in the form of a gas, solid, or liquid under the process conditions, they may be included as constituents of the parent metal, or they may be added to any one of the constituents involved in the formation of the oxidation reaction product. Dopants may: (1) create favorable surface energy relationships which enhance or induce the wetting of the oxidation reaction product by the molten parent metal; and/or (2) form a "precursor layer" at the growth surface by reaction with alloy, oxidant, and/or filler, that (a) minimizes formation of a protective and coherent oxidation reaction product layer(s), (b) may enhance oxidant solubility (and thus permeability) in molten metal, and/or (c) allows for transport of oxidant from the oxidizing atmosphere through any precursor oxide layer to combine subsequently with the molten metal to form another oxidation reaction product; and/or (3) cause microstructural modifications of the oxidation reaction product as it is formed or subsequently and/or alter the metallic constituent composition and properties of such oxidation reaction product; and/or (4) enhance growth nucleation and uniformity of growth of oxidation reaction product.

"Filler", as used herein in conjunction with ceramic matrix composite bodies, means either single constituents or mixtures of constituents which are substantially non-reactive with and/or of limited solubility in the metallic constituent and may be single or multi-phase. Fillers may be provided in a wide variety of forms and sizes, such as powders, flakes, platelets, microspheres, whiskers, bubbles, etc., and may be either dense or porous. "Filler" may also include ceramic fillers, such as alumina or silicon carbide, as fibers, chopped fibers, particulates, whiskers, bubbles, spheres, fiber mats, or the like, and ceramic-coated fillers such as carbon fibers coated with alumina or silicon carbide to protect the carbon from attack, for example, by a molten aluminum metal. Fillers may also include certain materials having a plurality of superimposed coatings thereon to achieve, for example, improved mechanical properties such as fracture toughness, etc. Examples of such materials include silicon carbide or silicon carbide based fibers coated with boron nitride (BN)/silicon carbide (SiC) or titanium carbide (TiC)/silicon nitride ($Si_3N_4$) or carbon (C)-/silicon carbide (SiC); carbon fiber coated with carbon (C)/silicon carbide; and alumina or alumina-based fibers coated with iridium (Ir)/silicon carbide (SiC) or niobium (Nb)/silicon carbide (SiC) or platinum (Pt)-/silicon carbide (SiC) or platinum (Pt)/boron nitride (BN)/silicon carbide (SiC). Fillers may also include metals.

"Filler", as used herein in conjunction with metal matrix composite bodies and/or metal removal from composite bodies, is intended to include either single constituents or mixtures of constituents which are substantially non-reactive with and/or of limited solubility in the matrix metal and may be single or multiphase. Fillers may be provided in a wide variety of forms, such as powders, flakes, platelets, microspheres, whiskers, bubbles, fibers, particulates, fiber mats, chopped fibers, spheres, pellets, tubules, refractory cloth, etc., and may be either dense or porous. "Filler" may also include ceramic fillers, such as alumina or silicon carbide, as fibers, chopped fibers, particulates, whiskers, bubbles, spheres, fiber mats, or the like, and ceramic-coated fillers such as carbon fibers coated with alumina or silicon carbide to protect the carbon from attack, for example, by a molten aluminum matrix metal. Fillers may also include metals.

"Infiltrating Atmosphere", as used herein, means that atmosphere which is present which interacts with at least one metallic component in the metallic constituent and/or preform (or filler material) and/or infiltration enhancer precursor and/or infiltration enhancer and permits or enhances spontaneous infiltration of at least a portion of the metallic constituent to occur.

"Infiltration Enhancer", as used herein, means a material which promotes or assists in the spontaneous infiltration of at least a portion of a metallic constituent into a filler material or preform. An infiltration enhancer may be formed from, for example, (1) a reaction of an infiltration enhancer precursor with an infiltrating atmosphere to form a gaseous species and/or (2) a reaction product of the infiltration enhancer precursor and the infiltrating atmosphere and/or (3) a reaction product of the infiltration enhancer precursor and the filler material or preform and/or (4) a reaction product of the infiltration enhancer precursor and the matrix metal. Moreover, the infiltration enhancer may be supplied directly to at least one of the filler material or preform of filler material, and/or metallic constituent, and/or infiltrating atmosphere and function in a substantially similar manner to an infiltration enhancer which has formed as a reaction between an infiltration enhancer precursor and another species. Ultimately, at least during the spontaneous infiltration, the infiltration enhancer should be located in at least a portion of, or on, the filler material or preform of filler material to achieve spontaneous infiltration.

"Infiltration Enhancer Precursor" or "Precursor to the Infiltration Enhancer", as used herein, means a material which when used in combination with the metallic constituent or at least a metal component of the metallic constituent, and/or preform and/or infiltrating atmosphere forms an infiltration enhancer which induces or assists the metallic constituent or at least a metal component of the metallic constituent to spontaneously infiltrate the filler material or preform. Without wishing to be bound by any particular theory or explanation, it appears as though it may be necessary for the precursor to the infiltration enhancer to be capable of being positioned, located or transportable to a location which permits the infiltration enhancer precursor to interact with the infiltrating atmosphere and/or the preform or filler material and/or metallic constituent or at least a metal component of the metallic constituent. For example, in some metallic components or metallic constituents/infiltration enhancer precursor/infiltrating atmosphere systems, it is desirable for the infiltration enhancer precursor to volatilize at, near, or in some cases, even somewhat above the temperature at which at least a portion of the metallic constituent becomes molten. Such volatilization may lead to: (1) a reaction of the infiltration enhancer precursor with the infiltrating atmosphere to form a gaseous species which enhances wetting of the filler material or preform by the metallic constituent or at least a metal component of the metallic constituent; and/or (2) a reaction of the infiltration enhancer precursor with the infiltrating atmosphere to form a solid, liquid or gaseous infiltration enhancer in at least a portion of the filler material or preform which enhances wetting; and/or (3) a reaction of the infiltration enhancer precursor within the filler material or preform which forms a solid, liquid or gaseous infiltration enhancer in at least a portion of the filler material or preform which enhances wetting; and/or (4) a reaction of the infiltration enhancer precursor with the metallic constituent or at last a metal component of the metallic constituent which forms a solid, liquid or gaseous infiltration enhancer in at least a portion of the filler material or preform which enhances wetting.

"Metallic Component or Metallic Constituent/Infiltration Enhancer Precursor/Infiltrating Atmosphere System" or "Spontaneous System", as used herein, refers to that combination of materials which exhibit spontaneous infiltration into a preform or filler material. It should be understood that whenever a "/" appears between an exemplary metallic component or metallic constituent, infiltration enhancer precursor and infiltrating atmosphere that the "/" is used to designate a system or combination of materials which, when combined in a particular manner, exhibits spontaneous infiltration into a preform or filler material.

"Metallic Component" or "Metal Component", as used herein, means a portion of or substantially all of the metallic constituent within a composite body which may be caused to spontaneously infiltrate a filler material or preform. For example, two metallic components of an aluminum/silicon metallic constituent would be aluminum and silicon.

"Metallic Constituent", as used herein, means any and all metallic components or phases contained within a composite body. When only one metal phase is present in a metallic constituent, reference to metallic component and metallic constituent means substantially the same thing. However, typically, reference to metallic constituent should be considered to be a general term for the combination of all metallic components and/or phases contained within a composite body.

"Metal Matrix Composite" or "MMC", as used herein, means a material comprising a two- or three-dimensionally interconnected alloy or metallic component or metallic constituent which has embedded a preform or filler material.

A Metal "Different" from the Metallic Constituent or Metallic Component means a metal which does not contain, as a primary component, the same metal as the metallic constituent or metallic component (e.g., if the primary component of the metallic component is aluminum, the "different" metal could have a primary component of, for example, nickel).

"Oxidant", as used herein, means one or more suitable electron acceptors or electron sharers and may be a solid, a liquid or a gas or some combination of these (e.g., a solid and a gas) at the oxidation reaction conditions. Typical oxidants include, without limitation, oxygen, nitrogen, any halogen or a combination thereof, sulphur, phosphorus, arsenic, carbon, boron, selenium, tellurium, and or compounds and combinations thereof, for example, silica or silicates (as sources of oxygen), methane, ethane, propane, acetylene, ethylene, propylene (the hydrocarbon as a source of carbon), and mixtures such as air, $H_2/H_2O$ and $CO/CO_2$ (as sources of oxygen). The latter two (i.e., $H_2/H_2O$ and $CO/CO_2$) being useful in reducing the oxygen activity of the environment.

"Oxidation", as used herein means a chemical reaction in which an oxidant reacts with a parent metal, and that parent metal has given up electrons to or shared electrons with the oxidant.

"Oxidation Reaction Product", as used herein, means one or more metals in any oxidized state wherein the metal(s) has given up electrons to or shared electrons with another element, compound, or combination thereof. Accordingly, an "oxidation reaction product" under this definition includes the product of the reaction of one or more metals with one or more oxidants.

"Parent Metal", as used herein, means that metal(s) (e.g., aluminum, silicon, titanium, tin, zirconium, etc.) which is the precursor of a polycrystalline oxidation reaction product and includes that metal(s) as an essentially pure metal, a commercially available metal having impurities and/or alloying constituents therein, or an alloy in which that metal precursor is the major constituent. When a specified metal is mentioned as the parent or precursor metal (e.g., aluminum, etc.), the metal identified should be read with this definition in mind unless indicated otherwise by the context.

"Preform" or "Permeable Preform", as used herein, means a porous mass of filler or filler material which is manufactured with at least one surface boundary which may define a boundary for infiltration of metallic component or metallic constituent, such mass retaining sufficient shape integrity and green strength to provide dimensional fidelity prior to being infiltrated. The mass should be sufficiently porous to accommodate spontaneous infiltration of the metallic component or metallic constituent thereinto. A preform typically comprises a bonded array or arrangement of filler, either homogeneous or heterogeneous, and may be comprised of any suitable material (e.g., ceramic and/or metal particulates, powders, fibers, whiskers, etc., and any combination thereof). A preform may exist either singularly or as an assemblage.

"Reactive Filler", as used herein in conjunction with metal matrix composite bodies, means that the filler interacts with molten matrix metal or molten metallic constituent, or at least one molten component of the metallic constituent (e.g., is reduced by the matrix metal).

"Spontaneous Infiltration", as used herein, means that the infiltration of metallic component or metallic constituent into the permeable mass of filler or preform occurs without the requirement for the application of pressure or vacuum (whether externally applied or internally created).

Brief Description of the Figures

The following Figures are provided to assist in understanding the invention, but are not intended to limit the scope of the invention. Similar reference numerals have been used wherever possible in each of the Figures to denote like components, wherein:

Figure 1a is a schematic cross-sectional representation of a typical lay-up for removing at least one metallic component of a metallic constituent from substantially all surfaces of a composite body;

Figure 1b is a schematic cross-sectional representation of a typical lay-up for selectively removing at least one metallic component of a metallic constituent from a portion of a composite body;

Figure 2 is a schematic cross-sectional representation of a typical lay-up for selectively removing at least one metallic component of a metallic constituent from an interior cavity of a composite body;

Figure 3 is a schematic cross-sectional representation of a typical lay-up for removing at least one metallic component of a metallic constituent which limits the amount of metal removed by the use of a barrier means;

Figure 4a is a schematic view of the top of a harness satin weave fabric in the as-is position as discussed in Example 1;

Figure 4b is a schematic cross-sectional representation of a harness satin weave fabric in the as-is position as discussed in Example 1;

Figure 4c is an isometric schematic view illustrating the axes of rotation for a harness satin weave fabric in the as-is position as discussed in Example 1;

Figure 4d is a schematic cross-sectional representation of a fabric preform comprised of harness satin fabrics as discussed in Example 1;

Figure 4e is an isometric schematic representation of a graphite containment fixture for effecting the coating of a fabric preform as discussed in Example 1;

Figure 4f is an isometric schematic representation of a cantilever graphite fixture for holding a boron nitride coated fabric preform to enable coating of the preform with a second coating as discussed in Example 1;

Figure 4g is a schematic cross-sectional representation of a growth lay-up for forming a fiber reinforced ceramic composite body as discussed in Example 1;

Figure 4h is a schematic cross-sectional representation of a lay-up for removing a metallic constituent from substantially all the surfaces of a fiber reinforced ceramic composite body as discussed in Example 1;

Figure 5a is a schematic cross-sectional representation of a graphite containment fixture for forming a "V"-shaped fabric preform as discussed in Example 6;

Figure 5b is a schematic cross-sectional representation of the formation of a shell on a "V"-shaped fabric preform as discussed in Example 6;

Figure 5c is a schematic cross-sectional representation of a lay-up for forming a fiber reinforced ceramic composite body having a "V"-shaped cross section;

Figure 5d is a schematic side view representation of a typical lay-up for removing a metallic constituent from an interior cavity of a fiber reinforced ceramic composite body; and

Figure 5e is a schematic cross-sectional representation of a lay-up for removing metallic constituent from machined surfaces of a fiber reinforced ceramic composite body.

Detailed Description of the Invention and Preferred Embodiments

The present invention relates to removing at least a portion, or substantially all, of at least one metallic component of a metallic constituent from a multi-phase composite body (e.g., a ceramic reinforced metal composite body or a metal reinforced ceramic composite body) by spontaneously infiltrating at least a portion of an adjacent mass of filler material or preform with said at least one metallic component. Particularly, an infiltration enhancer and/or an infiltration enhancer precursor and/or an infiltrating atmosphere are in communication with the filler material or preform, at least at some point during the process, which permits said at least one metallic component of the metallic constituent in the composite body, when molten, to spontaneously infiltrate at least a portion of the adjacent filler material or preform.

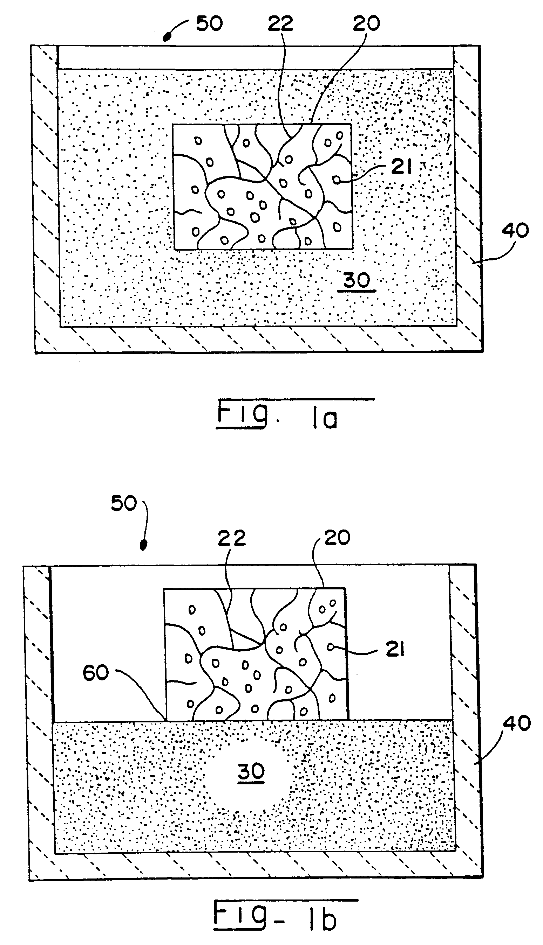

With reference to Figure 1a, a composite body 20 contains ceramic particulate 21 and a metallic constituent 22. The composite body 20 is substantially completely buried within a filler material 30, which is contained within an appropriate refractory vessel 40. The filler material 30 may be any suitable material, as discussed in greater detail below, which is capable of being spontaneously infiltrated by at least one metallic component of the metallic constituent 22. An infiltrating atmosphere 50 may be provided such that it can permeate the filler material 30 and contact at least a portion of the composite body 20. The refractory container 40, and its contents, may be placed into a controlled atmosphere furnace to initiate spontaneous infiltration of at least one metallic component of the metallic constituent 22 into at least a portion of the filler material 30. In this embodiment, spontaneous infiltration of said at least one metallic component of the metallic constituent 22 may be expected to occur from substantially all surfaces of the composite body 20. Spontaneous infiltration can occur until substantially all of the metallic component of the metallic constituent has spontaneously infiltrated the filler material, assuming that the metallic component is substantially interconnected throughout the composite body, or the spontaneous infiltration can be terminated by altering at least one of the process conditions needed to achieve spontaneous infiltration.

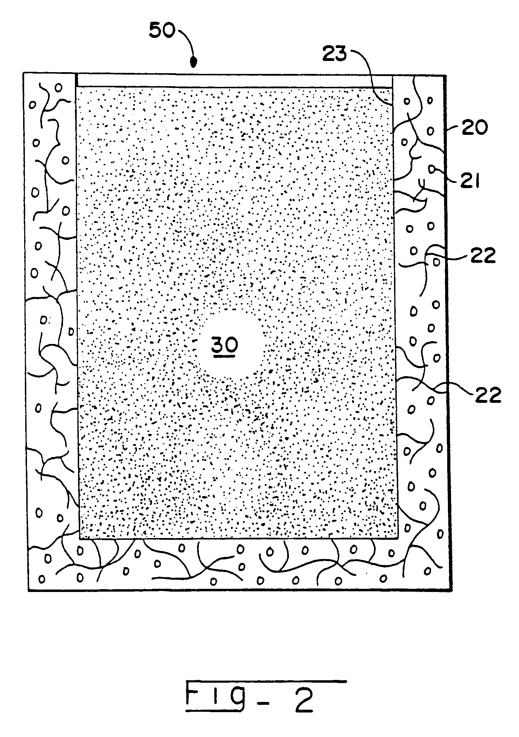

Figure 1b shows a lay-up similar to that shown in Figure 1a, however, rather than surrounding completely the composite body 20 with filler material 30, the composite body 20 is placed into limited contact with the filler material 30. In this embodiment, selective removal of at least one metallic component of the metallic constituent 22 from the composite body 20 could be expected to occur at the surface 60, which is an interface between the composite body 20 and the filler material 30. A similar embodiment to that embodiment shown in Figure 2b would be to surround the composite body 20 with filler material 30 in an amount which was intermediate between the amounts which are shown in Figure 1a and Figure 1b.

Another embodiment of the invention is shown in Figure 2. In this embodiment, a filler material 30 is placed into at least a portion of a cavity 23 contained within a composite body 20. In this embodiment, at least one metallic component of a metallic constituent 22 of the composite body 20 can be expected to spontaneously infiltrate the filler material 30, thereby providing for a selected or directed removal of said at least one metallic component of the metallic constituent 22 from the composite body 20 into substantially only the filler material 30 located within the cavity 23. If necessary, the composite body 20 could be contained within any appropriate refractory vessel during the processing thereof.

It is noted that in each of the Figures, crude representation of the metallic constituent 22 and ceramic particulate 21 have been made. It is to be understood that the metallic constituent 22 or at least one metallic component of the metallic constituent 22 could be connected in only a limited amount or could be highly interconnected. Moreover, the number and volume percent of phases present in the composite body, the chemical constituency of the phases, the size and shape of the phase(s), could vary widely. The Figures are provided only to give a general understanding of the invention and should not be construed in any manner as limiting the scope of the invention.

Without wishing to be bound by any particular theory or explanation, when an infiltration enhancer precursor is utilized in combination with at least one of the metallic constituent or at least one metallic component of the metallic constituent, and/or filler material or preform and/or infiltrating atmosphere, the infiltration enhancer precursor may react to form an infiltration enhancer which induces or assists at least one molten metallic component of the metallic constituent to spontaneously infiltrate a filler material or preform. Moreover, it appears as though it may be necessary for the precursor to the infiltration enhancer to be capable of being positioned, located or transportable to a location which permits the infiltration enhancer precursor to interact with at least one of the infiltrating atmosphere, and/or the preform or filler material, and/or molten metallic component or metallic constituent. For example, in some metallic component or metallic constituent/infiltration enhancer precursor/infiltrating atmosphere systems, it is desirable for the infiltration enhancer precursor to volatilize at, near, or in some cases, even somewhat above the temperature at which at least one metallic component of the metallic constituent becomes molten. Such volatilization may lead to: (1) a reaction of the infiltration enhancer precursor with the infiltrating atmosphere to form a gaseous species which enhances wetting of the filler material or preform by the metallic component or metallic constituent; and/or (2) a reaction of the infiltration enhancer precursor with the infiltrating atmosphere to form a solid, liquid or gaseous infiltration enhancer in at least a portion of the filler material or preform which enhances wetting; and/or (3) a reaction of the infiltration enhancer precursor within the filler material or preform which forms a solid, liquid or gaseous infiltration enhancer in at least a portion of the filler material or preform which enhances wetting; and/or (4) a reaction of the infiltration enhancer precursor with the molten metallic constituent or the molten metallic component to form a solid, liquid or gaseous infiltration enhancer in at least a portion of the filler material or preform which enhances wetting.

Thus, for example, if an infiltration enhancer precursor was included or combined with, at least at some point during the process, molten metallic component or metallic constituent, it is possible that the infiltration enhancer precursor could volatilize from the molten metallic component or molten metallic constituent and react with at least one component in the filler material or preform and/or the infiltrating atmosphere. Such reaction could result in the formation of a solid species, if such solid species was stable at the infiltration temperature, said solid species being capable of being deposited on at least a portion of the filler material or preform as, for example, a coating. Moreover, it is conceivable that such solid species could be present as a discernable solid within at least a portion of the preform or filler material. If such a solid species was formed, the molten metal may have a tendency to react (e.g., the molten metallic component or metallic constituent may chemically reduce the formed solid species) such that infiltration enhancer precursor may become associated with (e.g., dissolved in or alloyed with) the molten metal. Accordingly, additional infiltration enhancer precursor may then be available to volatilize and react with another species (e.g., the filler material or preform and/or infiltrating atmosphere) and again form a similar solid species. It is conceivable that a continuous process of conversion of infiltration enhancer precursor to infiltration enhancer followed by a reduction reaction of the infiltration enhancer with molten metal to again form additional infiltration enhancer, and so on, could occur, until the result achieved is a desirable removal of metallic component or metallic constituent from the composite body.

In order to effect spontaneous infiltration of the metallic component or metallic constituent into the filler material or preform, an infiltration enhancer should be provided to the spontaneous system. An infiltration enhancer could be formed from an infiltration enhancer precursor which could be provided (1) in the metallic constituent or in at least one metallic component of the metallic constituent; and/or (2) in the filler material or preform; and/or (3) from the infiltrating atmosphere; and/or (4) from an external source into the spontaneous system. Moreover, rather than supplying an infiltration enhancer precursor, an infiltration enhancer may be supplied directly to at least one of the filler material or preform, and/or metallic constituent or at least one metallic component of metallic constituent, and/or infiltrating atmosphere. Ultimately, at least during the spontaneous infiltration, the infiltration enhancer should be located in at least a portion of the filler material or preform.

In a preferred embodiment of the invention, it is possible that the infiltration enhancer precursor can be at least partially reacted with the infiltrating atmosphere such that the infiltration enhancer can be formed in at least a portion of the filler material or preform prior to or substantially contiguous with contacting the filler material or preform with at least a portion of the metallic constituent or at least one metallic component of the metallic constituent (e.g., if magnesium was the infiltration enhancer precursor and nitrogen was the infiltrating atmosphere, the infiltration enhancer could be a magnesium nitride which would be located in at least a portion of the preform or filler material).

An example of a metallic component or metallic constituent/infiltration enhancer precursor/infiltrating atmosphere system is the aluminum/magnesium/nitrogen system. Specifically, if an aluminum metal comprised the metallic component or metallic constituent and the aluminum metal was rendered molten, a filler material or preform could thereafter be contacted with molten aluminum metal and be spontaneously infiltrated.

13

Moreover, rather than supplying an infiltration enhancer precursor, an infiltration enhancer may be supplied directly to at least one of the preform or filler material, and/or metallic component or metallic constituent, and/or infiltrating atmosphere. Ultimately, at least during the spontaneous infiltration, the infiltration enhancer should be located in at least a portion of the filler material or preform.

Under the conditions employed in the method of the present invention, in the case of an aluminum metallic component/magnesium/nitrogen spontaneous infiltration system, the preform or filler material should be sufficiently permeable to permit the nitrogen-containing gas to penetrate or permeate the filler material or preform at some point during the process and/or contact the molten aluminum metallic component. Moreover, the permeable filler material or preform can accommodate infiltration of the molten aluminum metallic component, thereby causing the nitrogen-permeated preform to be infiltrated spontaneously with molten aluminum metallic component from the composite body and/or cause the nitrogen to react with an infiltration enhancer precursor to form infiltration enhancer in the filler material or preform and thereby result in spontaneous infiltration. The extent of spontaneous infiltration and depletion of aluminum metallic component from the composite body will vary with a given set of process conditions, including magnesium content of the aluminum, magnesium content of the preform or filler material, amount of magnesium nitride in the preform or filler material, the presence of additional alloying elements (e.g., silicon, iron, copper, manganese, chromium, zinc, and the like), average size of the filler material (e.g., particle diameter) or average size of the filler material comprising the preform, surface condition (e.g., impurities) and type of filler material or preform, nitrogen concentration of the infiltrating atmosphere, time permitted for infiltration and temperature at which infiltration occurs.

Thus, a metallic constituent of a composite body can be at least partially, or substantially completely, removed by causing at least one metallic component of the metallic constituent to spontaneously infiltrate a permeable mass of filler material or a preform. To achieve such spontaneous infiltration, at least a portion of the permeable mass is placed into contact with at least a portion of the metallic constituent contained within the composite body. Thus, at least a portion of the metallic constituent should be at least partially accessible, or can be made to be at least partially accessible, from at least one surface of the composite body.

Specifically, an infiltration enhancer and/or an infiltration enhancer precursor and/or an infiltrating atmosphere are in communication with the filler material or preform, at least at some point during the process, which permits the at least one metallic component of the metallic constituent of a composite body, when made molten, to spontaneously infiltrate at least a portion of the filler material or preform. In a first preferred embodiment, a precursor to an infiltration enhancer may be supplied to at least one of, a portion of at least one surface of the composite body, and/or diffused into at least a portion of at least one metallic component or at least a portion of the metallic constituent of the composite body, and/or mixed into at least a portion of the filler material or preform which is placed into contact with at least a portion of the composite body, and/or contained in an infiltrating atmosphere. The supplied infiltration enhancer precursor may thereafter react with at least one of the filler material or preform, and/or at least one metallic component in the metallic constituent of the composite body, and/or the infiltrating atmosphere, thereby producing infiltration enhancer in at least a portion of, or on at least a portion of, the filler material or preform, which in turn is in contact with at least a portion of at least one surface of the composite body. Ultimately, at least during the spontaneous infiltration, infiltration enhancer should be in contact with at least a portion of the filler material or preform.

In another preferred embodiment of the invention, rather than supplying an infiltration enhancer precursor, an infiltration enhancer may be supplied directly to at least one of the filler material or preform, and/or metallic constituent of the composite body or at least one metallic component of the metallic constituent of the composite body, and/or infiltrating atmosphere. Ultimately, at least during the spontaneous infiltration, the infiltration enhancer should be in contact with at least a portion of the filler material or preform which, in turn, is in contact with at least a portion of the surface of the composite body.

In any of the above-discussed preferred embodiments, the presence of infiltration enhancer and/or infiltration enhancer precursor in at least a portion of the filler material or preform may cause at least one metallic component of the metallic constituent, or substantially all of the metallic constituent, of the composite body to spontaneously infiltrate at least a portion of the filler material or preform. The amount of or selected portion of metallic constituent which is caused to spontaneously infiltrate the filler material or preform can be controlled to achieve desirable metal removal. Specifically, substantially all metallic constituent located in a certain area within a composite body (e.g., located near a surface of the composite body) may be completely removed from that selected area thereby leaving other areas of metallic constituent within the composite body substantially undisturbed. Moreover, if the metallic constituent is substantially interconnected throughout the composite body, substantially all of the metallic constituent could be removed. The volumetric amount of metallic constituent to be removed from the composite body depends upon the ultimate application for the composite body. Thus, the present invention may be utilized merely as a surface modification process for composite products, or it could be used to remove substantially all of a metallic constituent from a composite product.

Still further, selected portions of the metallic constituent could be separately removed, leaving behind substantially undisturbed residual metallic constituent. Specifically, one or more metallic components of a multi-phase metallic constituent could be removed from selected areas of a composite body or could be removed substantially uniformly from the composite body, depending upon the ultimate application for the composite body. Such selected removal of one or more metallic components of a multi-phase metallic constituent could occur, for example, due to operating at a temperature range within which only said one or more metallic components were molten and thus were the only components that were involved in the spontaneous infiltration into the adjacent permeable mass. However, for example, if the temperature was increased to a range within which all components of the multi-phase metallic constituent were rendered molten, then the entire multi-phase metallic constituent may be removable from the composite body. Selective removal of at least one component from the multi-phase metallic constituent could provide for a grading, either slight or substantial, of the microstructure of a composite body, thus resulting in graded properties of the composite body.

In another preferred embodiment for removing at least one metallic component of a metallic constituent from at least a portion of a composite body, the composite body may be substantially completely surrounded by a filler material or preform. In this embodiment, spontaneous infiltration of the filler material or preform by at least a portion, or substantially all, of the metallic constituent could be achieved from substantially all surfaces of the composite body, so long as the metallic constituent is accessible, or could be made to be accessible, from such surfaces.

In another preferred embodiment for removing at least one metallic component of a metallic constituent from a composite body, only a portion of the composite body may be contacted with a permeable mass of filler material or preform. In this preferred embodiment, at least one metallic component of the metallic constituent could be selectively removed from that surface which is in contact with the permeable mass. In this preferred embodiment, a grading of the properties of the composite body may be achieved by varying the volume percent of metallic constituent present from, for example, one side of the composite body to an opposite side of the composite body. Thus, this grading of volume percent of metallic constituent within a composite body could permit the composite body to be utilized for a number of different conventional applications. Still further, by contacting only a portion of a composite body with a filler material or preform, any surface irregularities which may result from the removal of metallic constituent from a composite body can be substantially confined to that portion of the composite body which contacts the filler material or preform.

In another preferred embodiment, the amount of infiltration enhancer and/or infiltration enhancer precursor which is supplied to, for example, the filler material or preform, can be varied from one point in the filler material or preform to another point. Specifically, the amount of spontaneous infiltration of at least one metallic component of the metallic constituent in the composite body into an adjacent filler material or preform may be controlled by controlling the amount of infiltration enhancer and/or infiltration enhancer precursor provided in the filler material or preform. Thus, for example, by supplying a greater amount of infiltration enhancer precursor and/or infiltration enhancer to one side of a composite body relative to a different side of a composite body, the rate and/or amount of spontaneous infiltration of at least one metallic component of the metallic constituent in the composite body can be selectively controlled. Likewise, by controlling the amount of infiltrating atmosphere supplied to, for example, different portions of the filler material or preform which are in contact with the metallic constituent of the composite body, the amount of spontaneous infiltration and/or rate of spontaneous infiltration can also be selectively controlled. Still further, by controlling the temperature of different portions of the filler material or preform and/or composite body, the amount of spontaneous infiltration can also be selectively controlled.

For example, if the metallic constituent of a composite body comprises aluminum and, if the aluminum contained, or was caused to contain, by any suitable means, at least about 0.1 percent by weight, and preferably at least about 1-3 percent by weight, magnesium, based on alloy weight, the magnesium could function as the infiltration enhancer precursor and permit spontaneous infiltration to occur in the presence of, for example, a nitrogenous atmosphere. Additionally, auxiliary elements contained within, or exposed to the metallic constituent, may affect the minimum amount of magnesium required in the aluminum metal to result in spontaneous infiltration of the filler material or preform. Loss of magnesium from the spontaneous system due to, for example, volatilization should not occur to such an extent that no magnesium was present to form infiltration enhancer. Thus, it is desirable to utilize a sufficient amount of initial elements (e.g., magnesium) to assure that spontaneous infiltration will not be adversely affected by volatilization. Still further, the presence of magnesium in the preform (or filler material) and/or on at least a portion of a surface of the composite body, may result in a reduction or substantially complete elimination of the need for magnesium to be present in the metallic constituent to achieve spontaneous infiltration (discussed in greater detail later herein).

The volume percent of nitrogen in the infiltrating atmosphere also affects spontaneous infiltration rates. Specifically, if less than about 10 volume percent of nitrogen is present in the atmosphere, very slow or little spontaneous infiltration will occur. It has been discovered that it is preferable for at least about 50 volume percent of nitrogen to be present in the atmosphere, thereby resulting in, for example, shorter infiltration times due to a much more rapid rate of infiltration. The infiltrating atmosphere (e.g., a nitrogen-containing gas) can be supplied directly to the filler material or preform and/or aluminum metallic constituent, or it may be produced or result from a decomposition of a material.

The minimum magnesium content required in the aluminum/magnesium/nitrogen spontaneous system for the molten aluminum to infiltrate a filler material or preform depends on one or more variables such as the processing temperature, time, the presence of auxiliary alloying elements such as silicon or zinc, the nature of the filler material, the location of the magnesium in one or more components of the spontaneous system, the nitrogen content of the atmosphere, and the rate at which the nitrogen atmosphere flows. Lower temperatures or shorter heating times can be used to obtain spontaneous infiltration as the magnesium content of the aluminum metallic constituent and/or contained in the preform is increased. Also, for a given magnesium content, the addition of certain auxiliary alloying elements into a metallic constituent, such as zinc, permits the use of lower temperatures. For example, a magnesium content of the aluminum metallic constituent at the lower preferred end of the operable range, e.g., from about 1 to 3 weight percent, may be used in conjunction with at least one of the following: an above-minimum processing temperature, a high nitrogen concentration, or one or more auxiliary alloying elements. When no magnesium is added to the preform, aluminum metallic constituent containing, or exposed to, from about 3 to 5 weight percent magnesium are preferred on the basis of their general utility over a wide variety of process conditions, with at least about 5 percent being preferred when lower temperatures and shorter times are employed. Magnesium contents in excess of about 10 percent by weight of the aluminum metallic constituent may be employed to moderate the temperature conditions required for infiltration. The magnesium content may be reduced when used in conjunction with an auxiliary alloying element, but these elements serve an auxiliary function only and are used together with at least the above-specified minimum amount of magnesium. Thus, it is possible to determine the amount of, for example, magnesium which may be required to achieve spontaneous infiltration behavior in the aluminum/magnesium/nitrogen spontaneous system. Accordingly, a metallic constituent in a metal reinforced ceramic body or in a ceramic reinforced metal body can be manufactured so as to contain the required amount of magnesium.

It is also noted that it is possible to supply to the spontaneous system, infiltration enhancer precursor and/or infiltration enhancer on a surface of the composite body and/or on a surface of the preform or filler material and/or within the preform or filler material prior to infiltrating the metallic constituent or at least one metallic component of the metallic constituent into the filler material or preform (i.e., it may not be necessary for the supplied infiltration enhancer or infiltration enhancer precursor to be alloyed with the metallic constituent, but rather, simply be supplied to the spontaneous system). For example, in the aluminum/magnesium/nitrogen system, if the magnesium was applied to a surface of the composite body it may be preferred that the surface should be the surface which is closest to, or preferably in contact with, the permeable mass of filler material or vice versa; or such magnesium could be mixed into at least a portion of the preform or filler material. Still further, it is possible that some combination of surface application, alloying and/or placement of magnesium into at least a portion of the filler material or preform of filler material could be used. Such combination of applying infiltration enhancer(s) and/or infiltration enhancer precursor(s) could result in a decrease in the total weight percent of magnesium needed to promote infiltration of the aluminum metallic component into the filler material or preform of filler material, as well as achieving lower temperatures at which infiltration can occur.

The use of one or more auxiliary alloying elements and the concentration of nitrogen in the surrounding gas also affects the extent of nitriding of the metallic constituent or at least one metallic component of metallic constituent at a given temperature. For example, auxiliary alloying elements such as zinc or iron included in the metallic constituent and/or placed on a surface of the composite body, and/or mixed within the filler material or preform, may be used to reduce the infiltration temperature and/or increase the amount or rate of infiltration at a particular temperature.

The concentration of magnesium in the metallic constituent, and/or placed onto a surface of the composite body, and/or combined in the filler or preform material, also tends to affect the extent and/or rate

16

of infiltration at a given temperature. Consequently, in some cases where little or no magnesium is contacted directly with the preform or filler material, it may be preferred that at least about three weight percent magnesium be included in the metallic constituent. Alloy contents of less than this amount, such as one weight percent magnesium, may require higher process temperatures or an auxiliary alloying element for infiltration. The temperature required to effect the spontaneous infiltration process of this invention may be lower: (1) when the magnesium content of the metallic constituent alone is increased, e.g., to at least about 5 weight percent; and/or (2) when alloying constituents are mixed with the permeable mass of filler material or preform; and/or (3) when another element such as zinc or iron is present somewhere in the system. The temperature also may vary with different filler materials. In general, in the aluminum metallic component/magnesium/nitrogen spontaneous system, spontaneous and progressive infiltration will occur at a process temperature of at least about 650°C, and preferably at a process temperature of at least about 750°C-850°C. Temperatures generally in excess of 1200°C do not appear to benefit the process, and a particularly useful temperature range has been found to be from about 675°C to about 1050°C. However, as a general rule, the spontaneous infiltration temperature is a temperature which is above the melting point of at least one metallic component of the metallic constituent but below the volatilization temperature of said metallic component. Moreover, the spontaneous infiltration temperature should be below the melting point of the filler material. Still further, as temperature is increased, the tendency to form a reaction product between at least one metallic component of the metallic constituent and the infiltrating atmosphere increases (e.g., in the case of aluminum metallic component and a nitrogen infiltrating atmosphere, aluminum nitride may be formed). Such reaction product may be desirable or undesirable. Additionally, electric resistance heating is typically used to achieve the infiltrating temperatures. However, any heating means which can cause said at least one metallic component to become molten and does not adversely affect spontaneous infiltration, is acceptable for use with the invention.

In the present method, for example, a permeable filler material or preform comes into contact with molten aluminum component of the composite body in the presence of, at least sometime during the process, a nitrogen-containing gas. The nitrogen-containing gas may be supplied by maintaining a continuous flow of gas into contact with at least one of the filler material or preform and/or molten aluminum or by containing the preform or filler material in a closed or static atmospheric system. Although the flow rate of the nitrogen-containing gas is not critical (e.g., flowing nitrogen may not even be essential), it is preferred that a flow rate be established such that, for example, the flow rate is sufficient to compensate for any nitrogen lost from the atmosphere due to any nitride formation, and also to prevent or inhibit the incursion of air which can have an oxidizing effect on one or more metallic components of the metallic constituent.

The method of removing at least one metallic component of a metallic constituent from a composite body is applicable to a wide variety of filler materials, and the choice of filler materials will depend on such factors as the composition of the metallic constituent, the process conditions, and the reactivity of the metallic constituent with the filler material. For example, when the metallic constituent comprises aluminum, suitable filler materials include (a) oxides, e.g. alumina, magnesia, zirconia; (b) carbides, e.g. silicon carbide; (c) borides, e.g. aluminum dodecaboride, titanium diboride, and (d) nitrides, e.g. aluminum nitride, silicon nitride, and (e) mixtures thereof. Further, the filler material or preform may be homogeneous or heterogeneous. If the filler material or preform were heterogeneous, it is possible that selective removal of metallic constituent could occur. For example, under a given set of reaction conditions, one filler material could be infiltrated at a faster rate relative to another filler material. Thus, by proper choice of combination of filler materials (e.g., by using particle size and/or chemical composition) metal could be withdrawn in differing amounts from different portions of a composite body, thereby resulting in graded properties in the composite body.

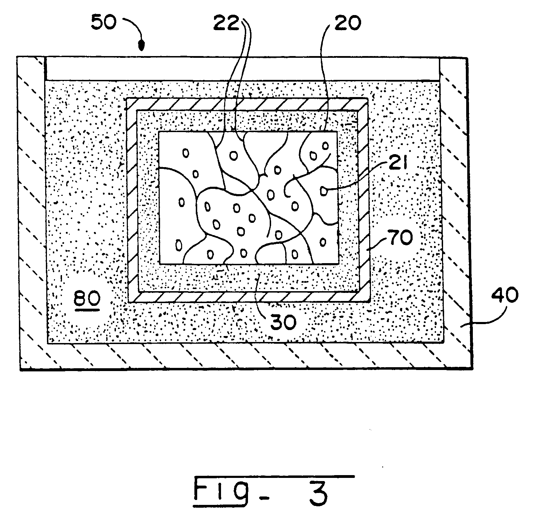

It may also be desirable to utilize a barrier means in combination with the present invention. Specifically, as shown in Figure 3, a barrier means 70 may at least partially, or substantially completely, surround a composite body 20, which itself is surrounded by a filler material 30, and contained within the barrier material 70. The barrier material 70 may than serve as a limiting means for removing metallic constituent from the composite body 20. Specifically, once spontaneous infiltration of at least one metallic component of the metallic constituent 22 of the composite body 20 had begun and had reached the barrier means 70, the barrier means 70 could prevent any further spontaneous infiltration of said metallic component from the composite body 20. Thus, the use of a barrier means may provide a control of the amount of said metallic component to be removed from the composite body 20.

As shown in Figure 3, the barrier means may be supported by a suitable substantially inert material 80. The barrier means for use with this invention may be any suitable means which interferes, inhibits, prevents or terminates the migration, movement, or the like, of molten metallic constituent beyond the surface

17

boundary of the barrier. Suitable barrier materials may be any material, compound, element, composition, or the like, which, under the process conditions of the invention, maintains some integrity, is not volatile and preferably, at least in some cases, is permeable to the infiltration atmosphere which may be used with the process, as well as being capable of locally inhibiting, stopping, interfering with, preventing, or the like, continued infiltration or any other kind of movement beyond the surface boundary of the barrier.

Suitable barrier means includes materials which are substantially non-wettable by the migrating molten metal under the process conditions employed. A barrier of this type appears to exhibit little or no affinity for the molten metal, and movement beyond the defined surface boundary of the filler material or preform is prevented or inhibited by the barrier means. As stated above, the barrier preferably should be permeable or porous, or rendered permeable by puncturing, to permit the infiltrating atmosphere to contact the molten matrix alloy.

Suitable barriers particularly useful for aluminum metallic components are those containing carbon, especially the crystalline allotropic form of carbon known as graphite. Graphite is essentially non-wettable by the molten aluminum alloy under the described process conditions. Particular preferred graphites are graphite foil products that are sold under the trademark GRAFOIL® graphite foil, registered to Union Carbide and under the trademark PERMA-FOIL graphite foil, distributed by TTAmerica. These graphite foils exhibit sealing characteristics that prevent the migration of molten aluminum alloy beyond the defined surface boundary of the filler material. These graphite foils are also resistant to heat and are chemically inert. GRAFOIL® graphite foil and PERMA-FOIL graphite foil are flexible, compatible, conformable and resilient. They can be made into a variety of shapes to fit any barrier application. However, graphite barrier means may be employed as a colloidal suspension, a slurry or paste or even as a paint film around and on the boundary of the filler material or preform. GRAFOIL® graphite foil and PERMA-FOIL graphite foil are particularly preferred because they are in the form of a flexible graphite sheet. In use, these paper-like graphites are simply formed around the filler material or preform.

Other useful barriers for aluminum metal in nitrogen include low-volatile organic compounds applied as a film or layer onto the external surface of the filler material or preform. Upon firing in nitrogen, especially at the process conditions of this invention, the organic compound decomposes leaving a carbon soot film. The organic compound may be applied by conventional means such as by painting, spraying, dipping, etc.

Moreover, finely ground particulate materials can function as a barrier so long as infiltration of the particulate material would occur at a rate which is slower than the rate of infiltration of the filler material.

Thus, the barrier means may be applied by any suitable means, such as by covering the defined surface boundary with a layer of the barrier means. Such a layer of barrier means may be applied by painting, dipping, silk screening, evaporating, or otherwise applying the barrier means in liquid (e.g., colloidal graphite suspension), slurry, or paste form, or by sputtering a vaporizable barrier means, or by simply depositing a layer of a solid particulate barrier means, or by applying a solid thin sheet or film of barrier means onto the defined surface boundary. With the barrier means in place, spontaneous infiltration substantially terminates when the infiltrating metal reaches the defined surface boundary and contacts the barrier means.

The present invention is particularly well suited for use in combination with metallic component or metallic constituent removal from ceramic and ceramic composite bodies formed by a directed metal oxidation of a parent metal. Specifically, the directed metal oxidation reaction is conducted so that the oxidation reaction product matrix grows into and embeds an appropriately selected filler material, thereby, forming a ceramic composite body. Specifically, in practicing the present invention, the parent metal (e.g., aluminum) is positioned adjacent to a filler material or preform such that growth of an oxidation reaction product will be in a direction towards the filler material or preform so that the filler material is embedded by the growing oxidation reaction product. The positioning and orienting of the parent metal and the filler material or preform with respect to each other may be accomplished by simply embedding a body of parent metal within a particulate filler material or by positioning one or more bodies of parent metal adjacent to or in contact with a filler material or preform, or an assembly of filler materials and/or preforms. Suitable morphologies for filler materials include rods, bars, wires, plates, platelets, hollow bodies, spheres, powders or other particulates, or combinations thereof. Likewise, the chemical composition of the filler material depends on the synergism which may be achieved between the filler material and the oxidation reaction product, as well as the ultimate desired use for the refractory material. In this regard, the filler material may have a chemical composition which is very similar to or very different from the ceramic matrix. Further, appropriate sizes of the filler material to be utilized depends on a number of different factors. However, certain desirable coarse grained filler materials typically have an average particle size of about 1000 microns and greater; whereas fine grained filler materials utilized in combination with the present invention have an average particle size of about one micron or less.

Additionally, the volume percent of filler provided in the matrix can range anywhere between about 20 volume percent to about 70 volume percent, the precise amount of filler utilized depending on the composition, morphology, etc., of the filler and the ultimate desired use for the ceramic composite body.

Further discussions of the formation of ceramic and ceramic matrix composite bodies which are desirable to use in connection with other aspects of the present invention can be found in the patents and patent applications disclosed in the Section herein entitled "Description of Commonly Owned U.S. Patents and U.S. Patent Applications."

The present invention is particularly well suited for use in combination with metallic component or metallic constituent removal from ceramic and ceramic composite bodies formed by a directed metal oxidation of a parent metal. Specifically, of particular interest in this disclosure is the removal of aluminum metal component(s) of metallic constituent(s) contained within fiber reinforced ceramic composite bodies, wherein the fiber reinforcement is coated by a plurality of superimposed coatings thereon. Specifically, for example, fiber reinforcements comprising silicon carbide, silicon carbide-based materials, carbon and carbon-based materials, alumina and alumina-based materials, can be coated by, for example, chemical vapor infiltration techniques. When such chemical vapor infiltration techniques are utilized, desirable coating combinations for silicon carbide and silicon carbide-based materials include boron nitride/silicon carbide or titanium carbide/silicon nitride or carbon/silicon carbide. When the fiber reinforcement comprises carbon fibers, desirable coating combinations include carbon/silicon carbide. Finally, when the fiber reinforcement comprises an alumina or aluminum-based fiber, desirable coating combination include iridium/silicon carbide or niobium/silicon carbide, platinum/silicon carbide or platinum/boron nitride/silicon carbide.

Further, when the above-discussed fiber reinforcements are utilized as reinforcements in ceramic composite bodies made by the directed oxidation of a parent metal and the resultant bodies are subjected to metal removal techniques of the invention, very desirable bodies can be manufactured.

For example, in a preferred embodiment of the invention, two or more coatings are applied to the filler material. In a system utilizing a duplex coating, the coatings are selected to provide adequate mismatch in bonding strengths so as to allow for debonding and pull-out upon application of stress. Also, the duplex coating is selected to provide protection against degradation of the filler, and the outer coating is selected to exhibit wettability of molten parent metal and to protect the inner coating from degradation or corrosion in high temperature, oxidizing environments under the conditions of the matrix formation process. Also, in some cases, a system using two coatings rather than three or more, may be advantageous from an economic standpoint.

Thus, the coatings are selected so as to be compatible with the filler material, and to the process conditions for the manufacture of the composites. Also, the coatings should complement each other in achieving the desired characteristics or properties. In a ceramic composite system having incorporated therein a filler with a duplex coating, for example, the first and outer coatings are selected to provide an adequate mismatch in interfacial shear strength so that one of the three zonal junctions is weak relative to the remaining zonal junctions to provide relative movement between the inner coating and the filler, or between coatings, or between the outer coating and the adjacent ceramic matrix. In this manner, debonding and pull-out will occur, thereby improving or enhancing the fracture toughness of the ceramic composite body.

Debonding and pull-out is especially beneficial for filler materials having a relatively high length to diameter ratio, such as fibers, typically at least about 2:1 and more particularly at least 3:1. Filler material with a low length to diameter ratio such as particles or spheres, characteristically exhibits crack deflection toughening.

In applying the coatings to the filler material, the thickness of each coating and the cumulative thickness of all coatings can vary over a wide range. This thickness can depend on such factors as the composition of each coating and their interaction, the type and geometry of the filler, and the process conditions and precursor metal used in the manufacture of the composite. Generally, the cumulative thickness for the coatings should be sufficient to completely cover the ceramic filler material and protect it from oxidation degradation, attack from molten metal, and other corrosive environments which may be encountered in employment of the finished composite. In the preferred embodiment, the inner coating is compatible with the filler material so as not to degrade its integrity, and further the inner coating can be selected to allow for debonding and pull-out or shear. The coating system is selected to be compatible with the matrix material, especially the precursor for the matrix, and further the coating system is selected so as to be capable of withstanding the process conditions used in the manufacture of the composites. While the inner coating may afford adequate protection against degradation of the filler or allow for shear between this first coating and the filler, a second or outer coating is selected to be compatible with the process conditions employed in the manufacture of the ceramic composite body, in that it should be substantially inert and not degrade, and further should exhibit wettability to molten parent metal when serving as a precursor to the ceramic matrix. Also, if the first coating or fiber is susceptible to attack and degradation by the process environment during composite manufacture or by attack of oxidants diffusing through the matrix during actual service, the second or outer coating is chosen to protect the inner coating or fiber from exposure to processing conditions and/or end use conditions. Thus, the coating system protects the fibers from degradation, as does one coating superimposed on another, and concomitantly provides for compatibility for matrix formation and use, and for relative movement to allow for shear. By reason of this coating system, structural degradation of the composite components is mitigated thereby prolonging the useful life and performance of the composite, and the fracture toughness of the composite is improved.

If the surface of the filler is very irregular and exhibits nodules, barbs, fibrils, projections, or protuberances, the filler material can mechanically interlock or bond with the adjacent surface including the adjacent coating or adjacent filler material thereby impeding or preventing debonding and pull-out, which can be deleterious to the properties of the composite. It, therefore, is desirable to provide a coating system which is sufficiently thick to completely cover the irregularities in the filler.

The thickness and properties of the coatings may vary depending on the deposition process and the filler material. In a duplex coating system, the thickness for each coating, in terms of the radius, typically may range from about 0.05 to about 25 microns, preferably to about 10 microns, but the innermost coating can be monoatomic in order to separate the second coating from the filler particle. The cumulative thickness for a coating system may be to about 25 microns, and more preferably 2-10 microns. Usually, a coating system having a thickness within this range can be applied to the filler by conventional or known means and will provide the desired properties described above.

It has been found that a number of coating compositions can be employed in the coating system of this invention. These compositions include the metal oxides, nitrides, borides and carbides, alkaline metal salts, alkaline earth metal salts, carbon, silicon, and the like. The choice of coating compositions will depend on the filler material, the compatibility of coatings to each other, and the process conditions for the manufacture of the ceramic composite. For example, silicon carbide fibers can be used as filler in composites made by the directed oxidation of a parent metal. In order to provide for debonding and pullout, the silicon carbide fibers may be coated with boron nitride which prevents a relatively strong bond between the coated fiber and the surrounding matrix. However, boron nitride may be degraded by the oxidation reaction conditions of the process for making the composite. Further, boron nitride may not be wet by certain metals, such as aluminum, under the conditions of the matrix formation process, and therefore as an outer coating would tend to interfere with the matrix formation. However, an inner coating exhibiting little or no wettability by parent metal under process conditions can be advantageous. For example, the coating system may have pores or flaws, but the contact angle of the molten parent metal with the inner coating may preclude transport of the parent metal through any pores or flaws in the inner coating and thereby protect the filler from attack by molten metal. The presence of an additional wettable outer coating on the filler would then avoid impedance to the matrix formation process. Therefore, a suitable outer coating such as silicon carbide is applied to the boron nitride coating to achieve compatibility with the forming process and to protect the boron nitride from degradation, such as by oxidation. Silicon carbide is, for example, wet by doped aluminum and relatively oxidation-resistant in an air environment at 1000 °C, where boron nitride is typically not wet by aluminum, and is oxidation-prone, at these temperatures. Further, the bond between the two coatings is weak relative to the other bonds thereby facilitating debonding and pull-out of the fibers during fracture. Other useful coating compositions include, for example, titanium carbide, silicon, calcium silicate, calcium sulfate, and carbon as the inner coating, and silicon, silica, alumina, zirconia, zirconium nitride, titanium nitride, aluminum nitride, and silicon nitride as an outer coating. Other suitable compositions for the first and outer coatings may be selected for use with the ceramic filler material provided these coatings complement each other in the manner described above.

Various demonstrations of the present invention are included in the Examples immediately following. However, these Examples should be considered as being illustrative and should not be construed as limiting the scope of the invention as defined in the appended claims.

Example 1

The following Example demonstrates a method for forming a fiber reinforced ceramic composite body and the resultant mechanical properties of the body from about room temperature to about 1400 °C. Specifically, this Example demonstrates a method for forming a silicon carbide fiber reinforced alumina composite body wherein the silicon carbide fibers are coated with a first layer of boron nitride and a second layer of silicon carbide to create a debond zone between the silicon carbide fiber and the alumina matrix.

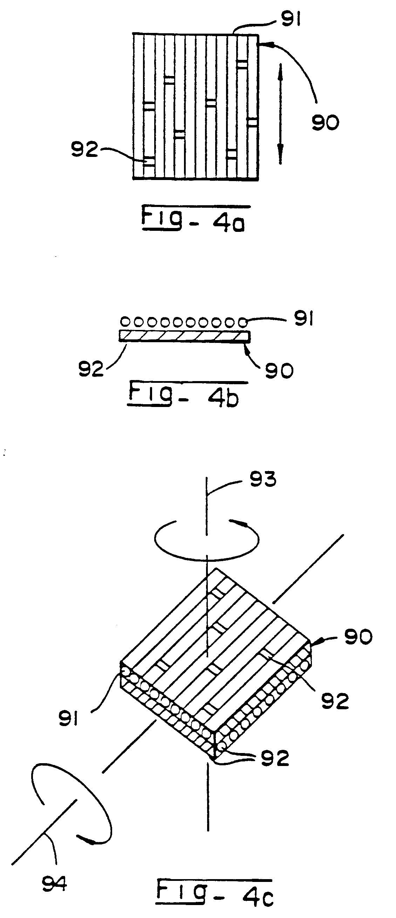

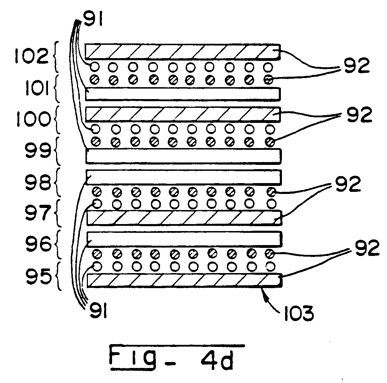

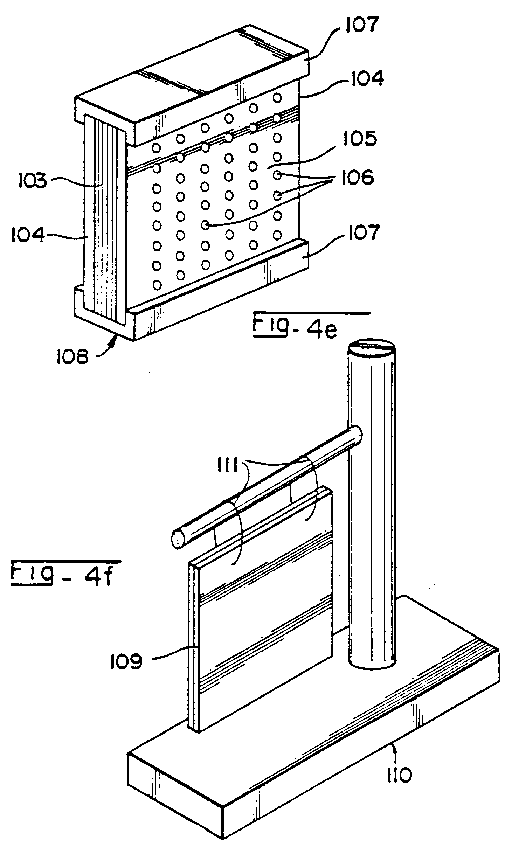

A fabric preform 103 was made by stacking a plurality of layers of 8 harness satin weave (8 HSW) fabric and 12 harness satin weave (12 HSW) fabric made from NICALON™ silicon carbide fiber (obtained from Dow Corning Corporation, Midland, MI) on top of each other. Figures 4a and 4b are schematics depicting a top view and a cross-sectional view respectively of the as-is position for a HSW fabric. In reference to Figure 4a and 4b, a HSW fabric is designated to be in the "as-is position" when, as viewed in cross-section, the axes of the warp yarns 92 of the fabric 90 are in the plane of the cross-sectional view and are located at the bottom (i.e., as shown in the cross-sectional view) of the fabric 90 and the axes of the fill yarns 91 are perpendicular to the plane of the cross-sectional view and are located at the top of the fabric 90. The orientation of additional fabric layers can be described in reference to the as-is position. For example, as depicted in Figure 4c, additional fabric layers can be (1) rotated about an axis 93 perpendicular to the plane of the fabric 90 and/or (2) rotated about an axis 94 perpendicular to the plane of the cross-section of the fabric 90 and then subsequently contacted or layered upon a fiber layer positioned in the as-is configuration. Thus, for example, as schematically depicted in cross-section in Figure 4d, a substantially square fabric preform 103 can be made from 8 pieces of HSW fabric, stacked in the following sequence:

A first fabric layer 95 comprising an 8 HSW fabric was placed on a supporting surface in the as-is position to start the fabric preform 103;

A second fabric layer 96 comprising a 12 HSW fabric, was rotated about 90° in the counterclockwise direction from the as-is position about an axis 93 perpendicular to the plane of the fabric and was placed on the first fabric layer 95 so that the edges of the second fabric layer 96 were substantially aligned with the edges of the first fabric layer 95;

A third fabric layer 97 comprising a 12 HSW fabric, in the as-is position, was placed on the second fabric layer 96 so the edges of the third fabric layer 97 were substantially aligned with the edges of the second fabric layer 96;

A fourth fabric layer 98 comprising a 12 HSW fabric, was rotated about 90° in the counterclockwise direction from the as-is position about an axis 93 perpendicular to the plane of the fabric and was placed on the third fabric layer 97 so that the edges of the fourth fabric layer 98 were substantially aligned with the edges of the third fabric layer 97;

A fifth fabric layer 99 comprising a 12 HSW fabric, was rotated about 90° in the counterclockwise direction from the as-is position about an axis 93 perpendicular to the plane of the fabric and then rotated about 180° in the clockwise direction about an axis 94 perpendicular to the plane of the cross-sectional view of the fabric and was placed on the fourth fabric layer 98 so that the edges of the fifth fabric layer 99 substantially aligned with the edges of the fourth fabric layer 98;

A sixth fabric layer 100 comprising a 12 HSW fabric, was rotated about 180° in the clockwise direction from the as-is position about an axis 94 perpendicular to the plane of the cross-sectional view of the fabric and was placed on the fifth fabric layer 99 so that the edges of the sixth fabric layer 100 were substantially aligned with the edges of the fifth fabric layer 99;

A seventh fabric layer 101 comprising a 12 HSW fabric, was rotated about 90° in the counterclockwise direction from the as-is position about an axis 93 perpendicular to the plane of the fabric and then rotated about 180° in the clockwise direction about an axis 94 perpendicular to the plane of the cross-sectional view of the fabric and was placed on the sixth fabric layer 100 so that the edges of the seventh fabric layer 101 were substantially aligned with the edges of the sixth fabric layer 100; and

Finally, an eighth fabric layer 102 comprising an 8 HSW fabric, was rotated about 180° in the clockwise direction from the as-is position about an axis perpendicular 94 to the plane of the cross-sectional view of the fabric and was placed on the seventh fabric layer 101 so that the edges of the eighth fabric layer 102 were substantially aligned with the edges of the seventh fabric layer.

In reference to Figure 4e, the fabric preform 103 comprised of the two 8 HSW outer fabric layers and the six 12 HSW inner fabric layers and measuring about 6.75 inch (171 mm) square and about 0.125 inch (3.2 mm) thick was placed on a perforated graphite plate 104 machined from Grade AXF-5Q graphite (Poco Graphite, Inc., Decatur, TX) which measured about 7.75 inches (197 mm) square and about 0.5 inch (13 mm) thick. The inner perforated region 105 of the perforated plate measured about 6.25 inches (159 mm) square. The holes 106 of the perforated region 105 had a diameter of about 0.25 inch (6.4 mm) and a center-to-center spacing of about 0.375 inch (9.5 mm) and comprised a 17 hole x 17 hole array which was bordered by an about 1 inch (25 mm) unperforated region. After the fabric preform 103 had been placed on the first graphite plate 104, a second graphite plate 104, substantially the same as the first, was placed over the fabric preform 103 and the plates were clamped using C-clamps to compress the fabric preform 103. Two graphite channel members 107 machined from Grade AXF-5Q graphite (Poco Graphite, Inc., Decatur, TX) and measuring about 7.75 inches (197 mm) long were placed over common ends of both perforated graphite plates 104 so as to contact opposite ends of the first and second perforated graphite plates 104 thereby creating a preform containment fixture 108. Figure 4e is an isometric schematic view of the preform containment fixture 108. After the graphite channels 107 were secured to the perforated plates 104, the C-clamps were removed from the perforated plates 104 and the elastic force exerted by the compressed fabric preform 103 biased the perforated graphite plates 104 against the graphite channel members 107 to form a relatively rigid preform containment fixture 108. The warp yarns 92 of the eighth layer 102 of the fabric preform 103 within the graphite containment fixture 108 were positioned so as to be parallel to the length of the graphite channel members 107 of the preform containment fixture 108.

The graphite containment fixture 108 containing the fabric preform 103 was placed into a reactor chamber of a chemical vapor infiltration apparatus having an outer diameter of about 12 inches (305 mm). The inner diameter of the reactor chamber measured about 9.45 inches (240 mm) after being lined with a quartz tube having a wall thickness of about 0.5 inch (13 mm) and lined with a graphite tube having a wall thickness of about 0.25 inch (6.4 mm). The warp yarns 92 of the eighth layer 102 of the fabric preform 103 were parallel to the gas flow direction within the chamber as well as being parallel to the longitudinal axis of the reactor chamber. The reactor chamber was closed and evacuated to about 0.004 inch (0.1 mm) of mercury (Hg). Then the reactor chamber was heated to about 800°C at about 10°C per minute so that the contents of the reactor chamber were at about 730°C, as indicated by a thermocouple contained therein. When the temperature within the reactor chamber reached about 730°C, a gas mixture comprised of ammonia ($NH_3$) flowing at about 1200 standard cubic centimeters (sccm) and boron chloride ($BCl_3$) flowing at about 800 sccm was introduced into the reactor chamber while maintaining a total operating pressure of from about 0.047 to about 0.051 inches of mercury (about 1.2 to about 1.3 mm Hg). After about 6.5 hours at about 730°C, the gas mixture flowing into the reactor chamber was interrupted, the power to the furnace heating the reactor chamber was interrupted, and the furnace and its contents were naturally cooled to about 200°C. At about 200°C, the reactor chamber door was opened and the graphite containment fixture 108 was removed, cooled and disassembled to reveal that the fibers of the fabric layers of the fabric preform 103 were coated and that the fabric layers comprising the fabric preform 103 were bonded together by a boron nitride coating formed during the process at about 730°C, thereby forming a coated and bonded fabric preform 109. The boron nitride coating had a thickness of about 0.4 microns.

The boron nitride coated and bonded fabric preform 109 was then suspended from a graphite cantilever support fixture 110 made from Grade AXF-5Q graphite (Poco Graphite, Inc., Decatur, TX) by wires 111 comprised of a Kanthal® iron-chromium-aluminum alloy all of which are depicted schematically in Figure 4f. The graphite cantilever support fixture 110 and the boron nitride bonded fabric preform 109 were then replaced into the reactor chamber of the chemical vapor infiltration apparatus discussed above such that the warp yarns 92 of the eighth layer 102 comprised of the 8 harness satin weave fabric were parallel to the gas flow direction within the chamber as well as being parallel to the longitudinal axis of the reactor chamber. After the reactor chamber door was closed, the reactor chamber and its contents were evacuated to about 0.591 inches (15 mm Hg) and hydrogen gas flowing at about 2500 sccm was introduced into the reactor chamber. The reactor chamber was heated at about 10°C per minute so that the contents of the reactor chamber were at about 925°C as indicated by a thermocouple therein. When the reactor chamber contents were at about 925°C, additional hydrogen, flowing at about 2500 sccm, was introduced into the reactor chamber to give a total hydrogen gas flow rate of about 5000 sccm. Once the temperature of the contents of the reactor chamber had substantially completely stabilized at about 925°C, about 2500 sccm hydrogen were diverted away from direct entry into the reactor chamber, and were first bubbled through a bath of trichloromethylsilane ($CH_3SiCl_3$) also known as methyltrichlorolsilane (MTS) (Hulls/Petrarch System, Bristol, PA), maintained at about 25°C, before entering the reactor chamber. After about 26 hours at about 925°C, the power to the furnace heating the reactor chamber was interrupted and the about 2500 sccm hydrogen that was being directed through the MTS bath was again permitted to flow directly into the reactor chamber to re-establish a direct hydrogen gas flow rate of about 5000 sccm into the reactor chamber. It was noted that about 4.75 liters of MTS had been consumed during the 26 hour of the run at about 925°C. After about a half hour during which a hydrogen gas flow rate at about 5000 sccm was maintained, the hydrogen flow rate was interrupted and the furnace and its contents were evacuated to about 0.039 inches 0.1 mm of mercury (Hg). The pressure within the reactor chamber was then allowed to increase to about atmospheric pressure while argon was introduced at a flow rate of about 14 liters per minute. After the reaction chamber had cooled to a temperature of about 200°C, the argon flow rate was interrupted and the reaction chamber door was open. The graphite cantilever support fixture 110 and the fabric preform were removed from the reactor chamber to reveal that the boron nitride bonded fabric preform 109 had been coated with a second layer of silicon carbide thereby forming a silicon carbide (SiC)/boron nitride (BN)-coated fabric preform 112. The silicon carbide had a thickness of about 2.3 microns.

A wax box pattern having a closed end and outer dimensions of about 7 inches (178 mm) square by about 2 inches (51 mm) tall and a wall thickness of about 0.25 inches (6.5 mm) was assembled from high temperature wax sheet (Kit Collins Company, Cleveland, OH) which contained adhesive backing on one side thereof. The wax box pattern was assembled by using a hot wax knife. The closed end of the wax pattern was beveled at an angle of about 22°. A slurry mixture comprised by weight of about 5 parts BLUONIC® A colloidal alumina (West Bond Corp., Wilmington, DE) and about 2 parts -325 mesh (average particle diameter less than about 45 $\mu$m) wollastonite (a calcium silicate mineral) was made by hand mixing the materials together. The slurry mixture was then painted onto the outer surface of the wax box pattern with a one inch sponge brush and coarse (-10, +100 mesh) wollastonite powder was sprinkled liberally onto the slurry mixture coating to prevent runoff and to form a first precursor layer of a shell 120. This procedure was repeated to build additional layers of coating with an about 0.5 hour drying period between the formation of the precursor layers. When enough precursor layers of slurry mixture/coarse wollastonite were formed to produce a thickness of about 0.25 inch (6.4 mm), the coated wax box pattern was set aside to dry at about room temperature for about 24 hours. The about 0.25 inch (6.4 mm) thick coating nominally comprised about 12 slurry mixture/coarse wollastonite layers. After the coated wax box pattern had substantially completely dried at about room temperature, the wax box pattern was placed into an air atmosphere furnace maintained under an exhaust hood and the furnace and its contents were held at a temperature of about 120°C for about 6 hours, during which time the wax melted leaving behind an unfired precursor to an alumina bonded wollastonite shell 120. The furnace and its contents were then heated to about 950°C in about 2 hours and held at about 950° for about 4 hours to substantially completely remove any residual wax and ensure the sintering of the alumina bonded wollastonite shell. The furnace and its contents were then cooled to about room temperature.

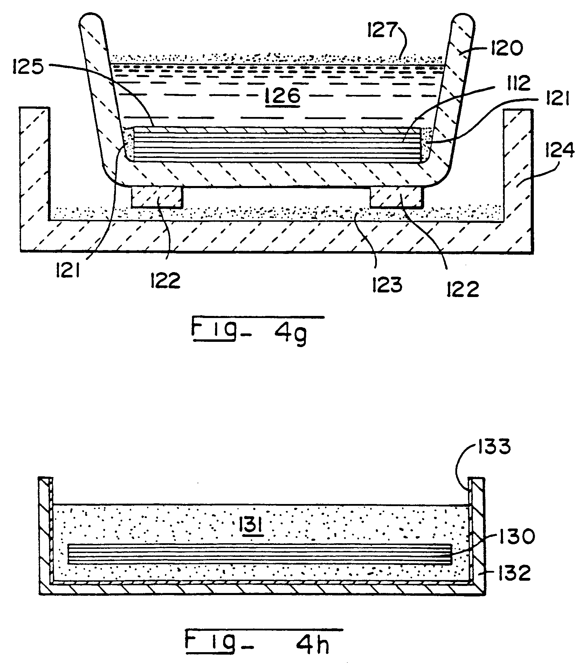

About 40 grams of VASELINE® petroleum jelly vehicle (Cheseborough Ponds, Inc., Greenwich, CT) were melted in a small aluminum weighing dish on a hot plate set at about medium heat until the jelly turned to a liquid. A clean sable brush was then used to substantially completely coat one of the 6.75 inch (171 mm) square surfaces of the SiC/BN-coated fabric preform 112 to provide an interface for the application of a nickel oxide powder. A mixture comprising about 8 grams of -325 mesh (particle diameter less than about 45 $\mu$m) nickel oxide powder and about 16 grams of ethanol was applied with a sponge brush to substantially completely cover the petroleum jelly coated surface of the SiC/BN-coated fabric preform. After the ethanol had substantially completely evaporated, the SiC/BN-coated fabric preform 112 was inserted into the alumina bonded wollastonite shell 120 such that the uncoated side of the SiC/BN-coated preform 112 not coated with the nickel oxide powder contacted the bottom of the shell 120, as shown in Figure 4g. The spaces between the perimeter of the SiC/BN-coated fabric preform 112 and the walls of the alumina bonded wollastonite shell 120 were filled with coarse (-10, +100 mesh) wollastonite until the surface of the wollastonite powder was substantially flush with the nickel oxide powder-coated surface of the SiC/BN-coated fabric preform 112. The alumina bonded wollastonite shell 120 containing the SiC/BN-coated fabric preform 112 was then placed onto stilts 122, which were made from fire brick, and was thereafter surrounded by wollastonite powder 123 which was contained in a refractory boat 124. The SiC/BN-coated fabric preform 112 was then leveled. About 1600 grams of a parent metal was distributed into four 30 gram clay crucibles (obtained from J.H. Berge, Inc., South Plainfield, NJ) in amounts of about 400 grams per crucible. The parent metal comprised by weight of about 8.5 to 11.0 percent silicon, 3.0 to 4.0 percent copper, 2.7 to 3.5 percent zinc, 0.2 to 0.3 percent magnesium, < 0.01 percent calcium, < 0.10 percent titanium, 0.7 to 1.0 percent iron, < 0.5 percent nickel, < 0.5 percent manganese, < 0.35 percent tin, < 0.001 percent beryllium, < 0.15 percent lead and the balance aluminum. The refractory boat 124 and its contents, as well as the four 30 gram clay crucibles containing the parent metal, were placed into an air atmosphere furnace and the furnace door was closed. The furnace and its contents were then heated from about room temperature to about 700°C at about 400°C per hour, during which time the VASELINE® petroleum jelly volatilized and the nickel oxide powder 125 fell onto the surface of the SiC/BN-coated fabric preform 112. After about an hour at about 700°C, during which time the parent metal 126 had substantially completely melted, the parent metal 126 was then poured into the alumina bonded wollastonite shell 120 and onto the nickel oxide powder-coated side of the SiC/BN-coated fabric preform 112, thereby covering the surface of the preform 112. Wollastonite powder 127 was then poured onto the surface of the molten parent metal 126 within the alumina bonded wollastonite shell 120 to substantially completely cover the surface of the molten parent metal. This assembly formed the lay-up for growth of a ceramic matrix composite body. The furnace and its contents comprising the lay-up were then heated to about 950°C in about an hour. After about 90 hours at about 950°C, the furnace and its contents were cooled to about 700°C in about 2 hours. At about 700°C, the lay-up was removed from the furnace and residual molten parent metal was decanted from the alumina bonded wollastonite shell 120, the shell 120 was quickly broken away from the SiC/BN-coated fabric preform 112 and the preform 112 was buried in a silica sand bed to cool the preform 112 to about room temperature. At about room temperature, it was observed that an oxidation reaction product had grown into and substantially completely embedded the SiC/BN-coated fabric preform 112, thereby forming a fiber reinforced ceramic composite body 130 having a plurality of fabric layers comprised of harness satin weaves. Specifically, the fiber reinforced ceramic composite body 130 comprised two outer layers of 8 harness satin weave silicon carbide fabric and six inner layers of 12 harness satin weave silicon carbide fabric embedded by an aluminum oxide oxidation product.

Once the ceramic composite body had been manufactured, the metal removal process of the present invention was begun. The first step of the metal removal process was to form a filler material mixture for infiltration by metal contained in the formed ceramic matrix composite body.

Specifically, filler material mixture comprising by weight of about 90 percent E67 1000 grit (average particle diameter of about 5 $\mu$m) alumina (Norton Co., Worcester, MA) and about 10 percent -325 mesh (particle diameter less than about 45 $\mu$m) magnesium powder (Reade Manufacturing Company, Lakehurst, NJ) was prepared in a one gallon NALGENE™ wide mouth plastic container (Nalge Co., Rochester, NY). Alumina milling balls were added to the filler material mixture in the plastic container and the container lid was closed. The plastic container and its contents were placed on a jar mill for about 4 hours to mix the alumina and magnesium powders together. After the alumina mixing balls had been separated from the alumina-magnesium filler material mixture 131, the filler material mixture 131 was complete.

A stainless steel boat 132 measuring about 7 inches (179 mm) square by about 2 inches (50.8 mm) deep and having a wall thickness of about 0.063 inches (1.6 mm) was lined with a graphite foil box 133 made from a piece of GRAFOIL® graphite foil (Union Carbide Corp., Carbon Products Division, Cleveland, OH). About 1 inch (25 mm) of the filler material mixture 131 was hand packed into the bottom of the graphite foil lined stainless steel boat 132. The fiber reinforced ceramic composite body 130 was then placed onto and forced into the filler material mixture 131. Additional filler material mixture 131 was then poured over the fiber reinforced ceramic composite body 130 to substantially completely cover it. The filler material mixture 131 was then hand packed to ensure good contact between the filler material mixture 131 and the fiber reinforced ceramic composite body 130, thereby forming a metal removal lay-up as depicted schematically in cross-section in Figure 4h.

The metal removal lay-up comprising the stainless steel boat 132 and its contents was then placed into a resistance heated controlled atmosphere furnace and the furnace chamber door was closed. The furnace chamber and its contents were first evacuated to at least 30 inches (762 mm) of mercury (Hg) vacuum, then the vacuum pump was disconnected from the furnace chamber and nitrogen was introduced into the chamber to establish about atmospheric pressure of nitrogen in the chamber. This operation was repeated. After the pressure in the furnace chamber reached about atmospheric pressure, the furnace chamber and its contents were heated from about room temperature to about 750°C at a rate of about 250°C per hour and held at about 750°C for about 5 hours and cooled from about 750°C to about 300°C at about 200°C per hour with a nitrogen gas flow rate of about 4000 sccm being maintained throughout the heating and cooling. At about 300°C, the nitrogen flow was interrupted, the furnace door was opened, and the stainless steel boat and its contents were removed and cooled by forced convection. At about room temperature, the filler material 131 was separated from the fiber reinforced ceramic composite body 130 and it was noted that the metallic constituent of the fiber reinforced ceramic composite body 130 had been substantially completely removed. The fiber reinforced ceramic composite body 130 was then subjected to grit blasting by a sand blaster which operated with a working pressure of about 75 pounds per square inch to remove any excess filler material that had adhered to the surface of the composite body 130. The fiber reinforced ceramic composite body was then cut with a diamond saw and machined into mechanical test specimens measuring about 2.4 inches (60 mm) long by about 0.2 inch (6 mm) wide by about 0.11 inch (3 mm) thick for mechanical properties measurements.

Several of the machined mechanical test specimens were then subjected to additional heat treatments. Specifically, a first group of samples was heat treated at about 1200°C for about 24 hours and a second group of samples was heated treated at about 1200°C for about 100 hours. The heat treatments were effected by placing the mechanical test specimens onto alumina trays with the tensile side of the test specimen facing away from the alumina trays. The alumina trays and their contents were then placed into air atmosphere furnaces and heated to about 1200°C at a rate of about 200°C per hour. After about 24 hours at about 1200°C, the furnace containing the first group of samples was cooled to about room temperature at a rate of about 200°C per hour, whereas after about 100 hours at about 1200°C, the furnace containing a second group of samples, was cooled to about room temperature at a rate of about 200°C per hour.

The flexural strengths of the fiber reinforced ceramic composite test specimens were measured using the procedure defined by the Department of the Army's proposed MIL-STD-1942A (November 21, 1983). This test was specifically designed for strength measurements of high-performance ceramic materials. The flexural strength is defined in this standard as the maximum outer fiber stress at the time of failure. A four-point-1/4-point flexural test was used. The height and width of the test bars were measured with a precision of about 390 microinch (0.01 mm). The test bars were subjected to a stress which was applied at four points by two lower span bearing points and two upper span bearing points. The lower span bearing points were about 1.6 inches (40 mm) apart, and the upper span bearing points were about 0.79 inch (20 mm) apart. The upper span was centered over the lower span, so that the load was applied substantially symmetrically on the test bar. The flexural strength measurements were made with a universal testing machine (Syntech, Stoughton, Massachussetts). The crosshead speed during testing was about 0.02 inch per minute (0.55 mm/minute). Flexural strengths determined at about 1200°C, about 1300°C and about 1400°C were performed with another universal testing machine equipped with an air atmosphere resistance heated furnace (Advanced Test Systems, Butler, Pennsylvania).

Table I contains a summary of the four point flexural strengths for NICALON™ silicon carbide reinforced alumina oxidation reaction product composite bodies. Specifically, Table I summarizes the sample condition, the test temperature, the number of samples tested, the average flexural strength and standard deviation, the maximum flexural strength and the minimum flexural strength. These data suggest that the flexural strength of fiber reinforced ceramic composite bodies subjected to the methods of the instant invention are substantially unaffected by test temperature between about room temperature and about 1200°C. Moreover, these data suggest that the flexural strengths of fiber reinforced ceramic composite bodies subjected to the methods of the instant invention are only slightly degraded at test temperatures greater than 1200°C and by extended exposure times at 1200°C.

## Example 2

This Example illustrates that a variety of ceramic matrix composite bodies can be subjected to the metal removal treatment of the instant invention to remove at least a portion of the metallic constituent of the ceramic matrix composite body. Specifically, Sample A of this Example comprised a silicon carbide fiber reinforced alumina oxidation reaction product composite body; and Sample B of this Example comprised a silicon carbide fiber reinforced aluminum nitride oxidation reaction product composite body.

## Sample A

A SiC/BN-coated fabric preform measuring about 3.0 inches (76 mm) long by about 3.0 inches (76 mm) wide and by about 0.125 inch (3.2 mm) thick was prepared by stacking eight layers of 12-harness satin weave (12-HSW) fabric comprising silicon carbide fibers (NICALON™ obtained from Dow Corning Corporation, Midland, Michigan) the fibers having a diameter ranging from about 394 microinch (10 $\mu$m) to about 787 microinch (20 $\mu$m). The 12-HSW silicon carbide fabrics were stacked such that each succeeding fabric layer was placed with its fill yarns being rotated about 90° with respect to the fill yarns of the previous fabric layer. The fabric preform comprising the stacked layers were then placed into a chemical-vapor-infiltration (CVI) reactor and the fibers were coated with a first layer of boron nitride (BN) substantially in accordance with the methods of Example 1. Thereafter, the reaction conditions in the CVI reactor were modified such that a CVI coating of silicon carbide (SiC) was placed on top of the BN coating substantially in accordance with the method of Example 1. The CVI coatings held the stacked fabric layers together, thereby forming the SiC/BN-coated fabric preform.

The SiC/BN-coated fabric preform comprising the eight stacked layers of 12-HSW fabric coated with a first layer of BN and a second layer of SiC was placed into the bottom of a porous castable refractory boat having holes at the bottom to facilitate air flow to the composite during composite growth, thereby forming a lay-up. Specifically, the porous castable refractory boat having an inner cavity measuring about 3.25 inches (83 mm) long by about 3.25 inches (83 mm) long by about 3.0 inches (76 mm) deep and having a wall thickness of about 0.125 inch (3.2 mm) was cast from a mixture comprised by weight of about 56.3% plaster of Paris (BONDEX™, Bondex International), about 28.1% water and about 15.6% 90 grit alumina (E1 ALUNDUM™, Norton Company, Worcester, Massachusetts). After the SiC/BN-coated fabric preform was placed into the porous castable refractory boat, -325 mesh (particle diameter less than about 45 $\mu$m) wollastonite particulate (a calcium silicate obtained from Peltz-Rowley Chemical Co., Philadelphia, Pennsylvania) was placed into the void space between the SiC/BN-coated fabric preform and the porous castable refractory boat until the level of the wollastonite was substantially flush with the top surface of the preform.

A thin layer of molten petroleum jelly vehicle (VASELINE®, Chesebrough-Pounds, Inc., Greenwich, Connecticut) was first applied to the top surface of the SiC/BN-coated fabric preform and then covered with nickel oxide (NiO) powder substantially in accordance of the methods of Example 1.

The porous castable refractory boat, having stilts at its corners, was placed into a resistance heated air atmosphere furnace and heated to about 700°C at a rate of about 400°C per hour. A parent metal, comprising by weight about 7.5-9.5% Si, 3.0-4.0% Cu, <2.9% Zn, 0.2-0.3% Mg, <1.5% Fe, <0.5% Mn, <0.35% Sn, and the balance aluminum and weighing about 420 grams, was also placed in a refractory container in the resistance heated air atmosphere furnace and heated to about 700°C. When parent metal was molten, the furnace door was opened and the parent metal was poured into the heated porous castable refractory boat and onto the NiO powder coated preform, thereby covering the surface of the SiC/BN-coated fabric preform. Wollastonite powder was then placed onto the surface of the molten parent metal within the porous boat to substantially completely cover the surface of the molten parent metal, thereby forming a lay-up. Then the furnace and its contents comprising the lay-up were heated to about 1000°C in about an hour. After about 60 hours at about 1000°C, the furnace and its contents were cooled to about 700°C in about 2 hours. At about 700°C, the lay-up was removed from the furnace and residual molten parent metal was decanted from the porous castable refractory boat. The refractory boat was rapidly broken away from the SiC/BN-coated preform and the SiC/BN-coated fabric preform was buried in silica sand to permit the perform to cool to about room temperature. At about room temperature, the SiC/BN-coated fabric preform was removed from the silica sand and it was observed that an oxidation reaction product comprising alumina had grown into and substantially completely embedded the SiC/BN-coated fabric preform, thereby forming a ceramic matrix composite body having a plurality of fabric layers of 12-HSW NICALON™ silicon carbide as a reinforcement. The silicon carbide fiber reinforced alumina composite body was then cut into bars measuring about 2.4 inches (60 mm) long by about 0.2 inch (6 mm) wide by about 0.11 inch (3 mm) thick in preparation for the removal of at least a portion of the metallic constituent by the instant invention.

Sample B

A graphite foil box having an inner cavity measuring about 4.0 inches (102 mm) long by about 4.0 inches (102 mm) wide by about 3.0 inches (96 mm) deep was made from a piece of graphite foil (GRAFOIL®, Union Carbide, Carbon Products Division, Cleveland, OH) measuring about 10.0 inches (254 mm) long by about 10.0 inches (254 mm) wide by about 0.015 inch (0.38 mm) thick. Four parallel cuts, 3.0 inches (76 mm) from the side and about 3.0 inches (76 mm) long were made into the graphite foil. The cut graphite foil was then folded and stapled to form the graphite foil box.

A parent metal, comprising by weight about 3 percent strontium and the balance aluminum and measuring about 4.0 inches (102 mm) long by about 4.0 inches (102 mm) wide by about 1.0 inch (25 mm) thick was coated on one side thereof measuring about 4.0 inches (102 mm) long by about 4.0 inches (102 mm) wide with a slurry comprising by weight about 90% -325 mesh (particle size less than about 45 $\mu$m) aluminum alloy powder and the balance ethanol. The -325 mesh aluminum alloy powder was nominally comprised by weight of about 7.5-9.5% Si, 3.0-4.0% Cu, <2.9% Zn, 0.2-0.3% Mg, <1.5% Fe, <0.5% Mn, <0.35% Sn, and the balance aluminum. The aluminum alloy powder-coated parent metal was then placed into the graphite foil box such that the uncoated surfaces of the parent metal contacted the inner surfaces of the graphite foil box.

A fabric preform measuring about 4.0 inches (102 mm) long by about 4.0 inches (102 mm) wide by about 0.06 inch (1.6 mm) thick was made within the graphite foil box and on the aluminum alloy powder coated surface of the parent metal by stacking four layers of 12 harness satin weave (HSW) silicon carbide fabric (NICALON™ obtained from Dow Corning Corporation, Midland, Michigan) onto the parent metal. About 0.5 inch (13 mm) of a 500 grit (average particle diameter of about 17 $\mu$m) alumina powder (El ALUNDUM", Norton Company, Worcester, Massachussetts) was poured over the 12-HSW fabric preform and leveled. The sides of the graphite foil box that extended beyond the level of the alumina powder covering the 12-HSW fabrics were folded over onto the alumina powder to form a lid for the graphite foil box.

A lay-up was formed in a graphite refractory container by placing and leveling about 0.5 inch (13 mm) of a 500 grit (average particle diameter of about 17 $\mu$m) alumina powder into the bottom of the graphite refractory container. The graphite foil box and its contents comprising the aluminum alloy powder-coated parent metal and the 12-HSW silicon carbide fabric preform were placed into the graphite refractory container and onto a 500 grit (average particle diameter of about 17 $\mu$m) alumina. Additional 500 grit alumina was placed into the graphite refractory container into the void defined by the inner surface of the graphite refractory container and the outer surface of the graphite foil box. The 500 grit (average particle diameter of about 17 μm) alumina powder also covered the top lid of the graphite foil box and its contents.

The lay-up comprising the graphite refractory container and its contents comprising the graphite foil box and its contents were placed into a retort lined resistance heat furnace and the retort door was closed. The furnace and its contents were heated to about 100°C at a rate of about 300°C per hour. At about 100°C, the retort was evacuated to about 30.0 inches (762 mm) mercury (Hg) vacuum and maintained at about 30.0 inches (762 mm) Hg vacuum to about 150°C. At about 150°C, nitrogen was introduced into the retorted at a flow rate of about 4 liters per minute. The furnace and its contents were then heated to about 900°C at about 300°C per hour. After about 200 hours at about 900°C, the furnace and its contents were cooled to about room temperature at a rate of about 300°C per hour. At about room temperature, the retort door was opened and the lay-up was removed. The lay-up was disassembled, the preform was removed from within the graphite foil box, and it was observed that an oxidation reaction product comprising aluminum nitride had grown into and substantially completely embedded the silicon carbide fabric preform thereby forming a ceramic matrix composite body reinforced with a plurality of fabric layers of 12-HSW NICALON™ silicon carbide as reinforcement.

Table II contains a summary of the parameters used to practice the metal removal step of the instant invention on Samples A and B. Specifically, Table II contains the dimensions of the Sample, the filler material used for metal removal, the infiltration enhancer precursor, the processing temperature, the processing time at the processing temperature, and the processing atmosphere.

Figure 1a shows a cross-sectional schematic of the setup used in this series of tests to remove the metallic constituent from Samples A and B.

After the formation of the silicon carbide fiber reinforced alumina composite body of Sample A had been achieved, the metal removal process was effected. Specifically, a filler material mixture was formed, comprising by weight about 90 percent filler, which comprised 1000 grit (average particle diameter of about 5 μm) $Al_2O_3$ (E67 tabular alumina, Norton Co., Worcester, MA) and about 10 percent by weight -325 mesh (particle diameter less than about 45 μm) magnesium powder (AESAR®, Johnson Matthey, Seabrook, NH). The filler material mixture was mixed in a plastic jar on a rotating jar mill for about an hour.

A graphite foil box having an inner cavity measuring about 3 inches (76 mm) long by about 3 inches (76 mm) wide and about 2.5 inches (64 mm) deep was made from graphite foil (PERMA FOIL, TTAmerica, Portland, OR). The graphite foil box was made from a piece of graphite foil, measuring about 8 inches (203 mm) long by about 8 inches (203 mm) wide by about 0.15 inches (4 mm) thick. Four parallel cuts about 2.5 inches (64 mm) from the side and about 2.5 inches (64 mm) long, were made into the graphite foil. The graphite foil was then folded into the graphite foil box and stapled together. Metal was removed from Sample A by first pouring about 0.5 inch (13 mm) of the mixture of filler material and magnesium powder into one of the graphite foil boxes. The filler material mixture was levelled and hand tapped until smooth. A bar of the silicon carbide fiber reinforced alumina composite of Sample A, and measuring about 1.7 inches (43.8 mm) long by about 0.25 inch (6.3 mm) wide by about 0.2 inch (4.5 mm) thick was placed onto the filler material mixture within the graphite foil box and covered with another about 0.5 inch (13 mm) of the filler material mixture which was again level led and hand tapped until smooth.

The graphite foil box containing Sample A was then placed into a graphite refractory container having inner dimensions of about 9 inches (229 mm) long by about 9 inches (229 mm) wide by about 5 inches (127 mm) deep and having a wall thickness of about 0.5 inch (13 mm). The graphite refractory container and its contents were then placed into a controlled atmosphere resistance heated furnace, the furnace door was closed and the furnace was evacuated to at about 30 inches (762 mm) Hg. After about 15 hours at about 30 inches (762 mm) of mercury vacuum, the vacuum was shut off and nitrogen gas was introduced into the furnace chamber at a flow rate of about 1 liter/minute. The operating pressure of the chamber was about 16.7 pounds per square inch (1.2 kg/cm²) with a nitrogen flow rate of about 1 liter/minute. The furnace was heated to about 850°C at about 200°C per hour. After about 10 hours at about 850°C, the power to the furnace was interrupted and the graphite refractory container and its contents were allowed to cool within the furnace to about room temperature. Once at room temperature, the graphite refractory container and its contents were removed and the lay-up for Sample A was disassembled to reveal that the metallic constituent comprising an aluminum alloy in the silicon carbide fiber reinforced alumina composite had been drawn out from the composite body during the metal removal process.

The setup for the removal of the metallic constituent from Sample B was substantially the same as that described for Sample A of this Example and is schematically illustrated in Figure 1a. The nitrogen flow rate to effect removal of the metallic constituent from Sample B was about two liters per minute. The controlled atmosphere furnace was heated to about the processing temperature of about 750°C at a rate of about 200°C per hour, held at about the processing temperature for about 10 hours. After about 10 hours at the processing temperature, at least a portion of the metallic constituent was removed from within the ceramic matrix composite body. Specifically, the metallic constituent spontaneously infiltrated the filler material mixture comprising substantially a 1000 grit (average particle diameter of about 5 $\mu$m) alumina and a -325 mesh magnesium infiltration enhancer precursor. The furnace and its contents were cooled to about room temperature. At about room temperature, the setup was removed from the furnace, disassembled, and weight loss due to the removal of the metallic constituent from Sample B was noted.

Example 3

This Example illustrates that ceramic matrix composite bodies whose metallic constituent has been substantially completely removed by the instant invention retain a greater portion of their flexural strength, as measured at about room temperatures, when measured at elevated temperatures in comparison to substantially similar ceramic matrix composite bodies whose metallic constituent has not been removed by the process of the present invention. Specifically, this Example compares the flexural strengths measured at about room temperature, at about 1000°C and at about 1200°C of silicon carbide fiber reinforced alumina composite bodies and the flexural strengths of silicon carbide fiber reinforced alumina composite bodies whose metallic constituent has been substantially removed by the instant invention .

The silicon carbide fiber reinforced alumina composite bodies of this Example (i.e., Samples C-H) were made substantially in accordance with the methods of Sample A in Example 2.

Figure 1a shows a cross-sectional schematic view of the setup used with Samples F through H to remove the metallic constituent from the silicon carbide fiber reinforced alumina composite bodies in this Example. Each experimental setup in Table III comprised an alumina crucible, a filler material mixture comprised of a filler material and an infiltration enhancer precursor, and a silicon carbide fiber reinforced alumina composite body surrounded by the filler material mixture and contained within the alumina crucible. The alumina crucibles for the setups used with Samples F, G and H were obtained from McDaniel Refractory Co., Beaver Falls, Pennsylvania and measured about 3.9 inches (100 mm) long by about 1.8 inches (45 mm) wide by about 0.75 inch (19 mm) tall.

The setups were placed into a resistance heated controlled atmosphere furnace and nitrogen was introduced. For Samples F, G and H, the nitrogen flow rate was about 1000 sccm. The furnace and its contents were then heated at a rate of about 200°C per hour to about 750°C. After about 5 hours at about 750°C, during which time the metallic constituent from within the fiber reinforced ceramic composite bodies spontaneously infiltrated the filler material mixture comprised of the filler material and the infiltration enhancer precursor, the furnace and its contents were allowed to cool to about room temperature. At about room temperature, each setup was removed from the furnace, disassembled, and it was noted that the samples experienced a weight loss due primarily to the removal of the metallic constituent from within the ceramic matrix composite body.

The flexural strengths of Samples C-H were measured using the procedure defined by the Department of the Army's proposed MIL-STD-19424 (November 21, 1983). This test was specifically designed for strength measurements of high-performance ceramic materials. The flexural strength is defined in this standard as the maximum outer fiber stress at the time of failure. A four-point-1/4-point flexural test was used. The flexural strengths were measured with test bars, measuring about 2 inches (50 mm) long by about 0.24 inch (6 mm) wide by about 0.12 inch (3 mm) thick, from the respective fiber reinforced ceramic composite bodies. The height and width of the test bars were measured with a precision of about 390 microinch (0.01 mm). The test bars were subjected to stress applied at four points by two lower span bearing points and two upper span bearing points. The lower span bearing points were about 1.6 inches (40 mm) apart, and the upper span bearing points were about 0.79 inch (20 mm) apart. The upper span was centered over the lower span, so that the load was applied substantially symmetrically on the test bar. The flexural strength measurements were made by a universal testing machine (Syntech, Stoughton, Massachussetts). The crosshead speed during testing was about 0.02 inch per minute (0.55 mm/minute). Flexural strengths determined at about 1000°C and about 1200°C were made by using a universal testing machine equipped with an air atmosphere resistance heated furnace (Advanced Test Systems, Butler, Pennsylvania).

Table III contains a comparison of the average flexural strengths of silicon carbide fiber reinforced alumina composite bodies whose metallic constituents were not removed (i.e., "as-grown" bodies) with the flexural strengths of silicon carbide fiber composite bodies whose metallic constituent was removed by the present invention, at temperatures of about room temperature, about 1000°C and about 1200°C. Specifically, Table III shows that the average flexural strength, measured at about 1200°C, of the as-grown silicon carbide fiber reinforced alumina composite body (i.e., Sample E) as compared to the average flexural strength of Sample C measured at about room temperature, is only about 54% as strong. In contrast, the average flexural strength measured at about 1200°C, of the silicon carbide fiber reinforced alumina composite body whose metallic constituent was substantially removed by the instant invention (i.e., Sample H), was about 72% of the room temperature flexural strength of Sample F. Thus, this Example demonstrates that by removing the metallic constituent by the present invention from a silicon carbide fiber reinforced alumina composite body, a greater portion of the body's flexural strength measured at room temperature is retained at elevated temperatures in comparison to strength retention at elevated temperatures of a fiber reinforced ceramic composite body in the as-grown condition.

Example 4

The following Example demonstrates that by subjecting fiber reinforced ceramic composite bodies to the method of the present invention, the ceramic matrix composite bodies at least maintain their room temperature fracture toughness at elevated temperatures. A series of fiber preforms were made substantially in accordance with the methods described in Example 1, except that the first layer and eighth layer of the fabric preform comprised 12 harness satin weave fabric instead of 8 harness satin weave fabric and the temperature of the methyltrichlorolsilane (MTS) bath used during the formation of silicon carbide coatings was maintained at about 18°C instead of about 25°C. The lay-up for the growth of the fiber reinforced ceramic composite body included an alumina-bonded wollastonite shell fabricated substantially in accordance with the methods described in Example 1, and the composite growth process was substantially the same as that described in Example 1. The resultant ceramic matrix composite bodies were subjected to a metal removal treatment substantially the same as that described in Example 1. The samples were subsequently machined to form mechanical test samples which were used to determine both the flexural strength and the fracture toughness of the fiber reinforced ceramic composite bodies both as a function of test temperature.

Table IV summarizes the results of these tests. The methods for measurement of the flexural strength was substantially in accordance with the methods described in Example 1. The method of Munz, Shannon and Bubsey (International Journal of Fracture, Vol. 16 (1980) R137-R141) was used to determine the fracture toughness of the silicon carbide fiber reinforced ceramic composite bodies. The fracture toughness was calculated from the maximum load of Chevron notch specimens in four point loading. Specifically, the geometry of each Chevron notch specimen was about 1.8 to 2.2 inches (45 to 55 mm) long, about 0.12 inch (3 mm) wide and about 0.15 inch (3.75 mm) high. A Chevron notch was cut in each specimen with a diamond saw to permit the propagation of a crack starting at the notch and traveling through the sample. The Chevron notched specimens, having the apex of the Chevron notch pointing downward, were placed into a fixture within a Universal test machine. The notch of the Chevron notch specimen, was placed between two pins about 1.6 inches (40 mm) apart and about 0.79 inch (20 mm) from each pin. The top side of the Chevron notch specimen was contacted by two pins about 0.79 inch (20 mm) apart and about 0.39 inch (10 mm) from the notch. The maximum load measurements were made with a Sintec Model CITS-2000/6 Universal Testing Machine (System Integration Technology Incorporated, Straton, MA). A crosshead speed of 0.02 inches/minute (0.58 millimeters/minute) was used. The load cell of the Universal testing machine was interfaced to a computer data acquisition system. The Chevron notch sample geometry and maximum load were used to calculate the fracture toughness of the material. Several samples were used to determine an average fracture toughness for a given group of parameters (e.g., temperature, fiber reinforced ceramic composite body, etc.)

Table IV summarizes the results of the measurements of the average flexural strength, the maximum flexural strength and the average fracture toughness all as a function of temperature, for Samples J, K and L, as treated in accordance with the present invention. Moreover, the fracture toughness of an untreated Sample I is compared to a treated Sample J. The data in Table IV shows that the fracture toughness of a fiber reinforced ceramic composite body with its metallic constituent substantially completely removed is not significantly marked elevated temperatures. In addition, the fracture toughness of a treated sample does not vary significantly from the fracture toughness of an untreated composite body.

Example 5

The following Example demonstrates that fiber reinforced ceramic composite bodies exhibiting excellent fracture toughness can be produced by (1) coating a fabric preform with coatings comprising silicon carbide (SiC)/boron nitride (BN); (2) growing an oxidation reaction product by a reaction of a parent metal with a vapor-phase oxidant to embed the SiC/BN-coated fabric preform and (3) removing the metallic constituent from the grown fiber reinforced ceramic composite body by the methods of the present invention.

A NICALON™ silicon carbide fiber reinforced alumina composite body plate measuring substantially the same as that in Example 1 was formed substantially in accordance with the methods of Example 1. Specifically, the fabric preform lay-up, the formation of both the boron nitride and silicon carbide coatings, the growth of the alumina oxidation reaction product embedding the SiC/BN-coated fabric preform and the removal of the metallic constituent from the fiber reinforced ceramic body were performed substantially in accordance to the methods of Example 1.

The fracture toughness of the fiber reinforced ceramic composite body, was measured substantially in accordance with the method of Example 4 except that specimen size used to determine the toughness measured from about 1.0 to about 1.2 inches (25 to 30 mm) long, about 0.15 inch (3.75 mm) high and about 0.12 inch (3 mm) wide. The apex of the Chevron notch pointed up within the Universal test machine. The notch of the specimen was placed between two pins about 0.39 inch (10 mm) apart and about 0.2 inch (5 mm) from each pin. The top side of the specimen was contacted by two pins about 0.79 inch (20 mm) apart and about 0.39 inch (10 mm) from the notch. Three specimens were tested to determine an average fracture toughness for a specific test temperature.

The fracture toughness measured at about room temperature at about 1200°C and about 1300°C of the fiber reinforced ceramic composite body of this Example were 35.3 + 1 MPa-m$^{1/2}$, 19.6 + 1 MPa-m$^{1/2}$ and 18.7 + 1 MPa-m$^{1/2}$, respectively.

Example 6

This Example demonstrates the use of a $Si_3N_4$ powder filler material in conjunction with a magnesium (Mg) infiltration enhancer precursor to effect the removal of at least a portion of the metallic constituent of a fiber reinforced ceramic composite body. Additionally, this Example demonstrates that a second metallic constituent removal treatment can be performed on a machined surface of a fiber reinforced ceramic composite body while substantially maintaining the finish of the machined surface.

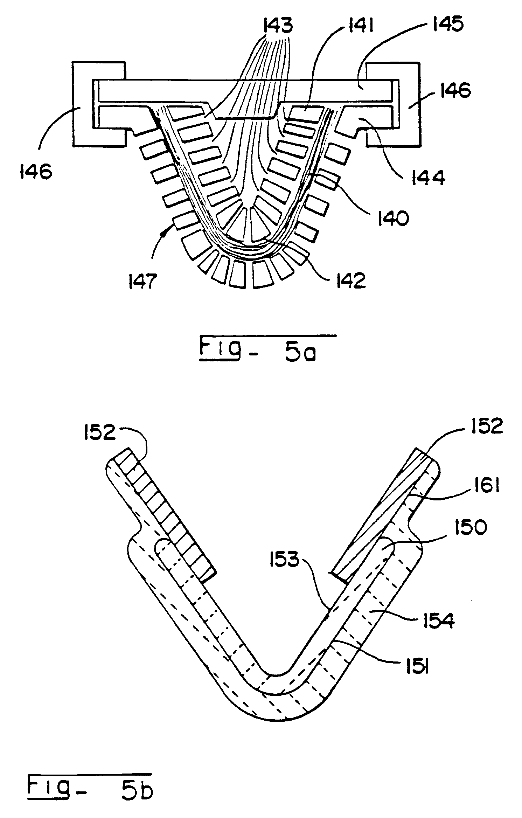

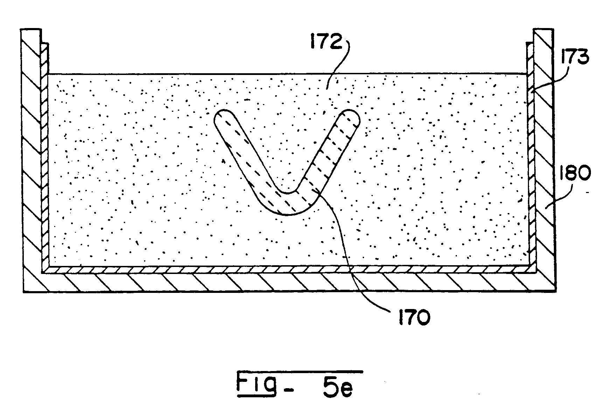

In reference to Figure 5a, a trough-shaped fabric preform 140 having a "V"-shaped cross-section was formed by stacking eight layers of harness satin weave (HSW) fabric substantially in accordance with the sequence of Example 1, except that the fabrics were sprayed using an air gun with a mixture comprised by weight of about 10% ELVACITE® 2045 isobutyl methacrylate (DuPont, Wilmington, DE) and about 90% acetone prior to stacking. The stacked fabrics were then formed around a "V"-shaped male graphite tool 141 having an outer surface 142 corresponding to the desired inner surface of the fabric preform 140. The graphite tools of this Example were machined from Grade AXF-5Q graphite (Poco Graphite, Decature, TX). The "V"-shaped male graphite tool 141 had a wall thickness of about 0.38 inch (9.6 mm) and was perforated over substantially all of its surface with holes 143 having diameters of about 0.125 inch (3.2 mm). To enable the fabric preform 141 to conform to the outer surface of the "V"-shaped male graphite tool 141, the fabric preform 140 was wet with acetone. The fabric preform 140 on the "V"-shaped male graphite tool 141 was then inserted into a female graphite tool 144 having an inner surface shaped to correspond to the desired shape of the outer surface of the fabric preform 140. A graphite retaining member 145 was engaged into the "V"-shaped female graphite tool 144 and secured by several clamping members 146 to compress the fabric preform 141 and to form a graphite containment fixture 147 to facilitate coating the fabric preform in a chemical vapor infiltration apparatus.

The graphite containment fixture 147 and its contents were then placed into an air atmosphere furnace to remove the isobutyl methacrylate. The furnace and its contents were heated from about room temperature to about 450°C in about 8 hours, held at about 450°C for about 5 hours, during which time the isobutyl methacrylate was removed, and cooled to about room temperature in about 13 hours.

The graphite containment fixture 147 containing the fabric preform 140 was then placed into the reactor chamber of the chemical vapor infiltration apparatus described in Example 1. A boron nitride coating was formed substantially in accordance with the method of Example 1 except that the time the furnace was maintained at about 800°C was about 5 hours. After the fabric preform had been coated with boron nitride, the gas mixtures within the reactor and the temperature of the reactor chamber were altered to deposit silicon carbide substantially in accordance with the methods of Example 1 except that the coating time was about 5 hours before the furnace was cooled to about 200°C. After the reactor chamber and its contents had cooled to about 200°C, the graphite containment fixture 147 was removed from the reactor chamber and disassembled to provide a SiC/BN-coated "V"-shaped fabric preform. The SiC/BN-coated fabric preform was then replaced in the reactor chamber and additional silicon carbide was deposited on the fabric preform substantially in accordance with the methods of Example 1 to form a trough-shaped preform 150.

Figure 5b shows a schematic cross-sectional view of a trough-shaped preform 150 measuring about 9 inches long (228.6 mm) and about 1 inch (25 mm) deep (i.e., as measured from a top portion of the trough to a bottom portion of the trough) fabricated from 8 layers of harness satin weave nicalon™ silicon carbide fibers (obtained from Dow Corning Corporation, Midland, MI) and having a "V"-shaped cross section. The trough shaped preform 150 contained pores along an outer surface 151 which were impregnated with molten red wax (Yakes Manufacturing Co., Chicago, IL). Strips 152 of high temperature wax sheet having an adhesive backing on one side (Kit Collin Company, Cleveland, OH) and measuring about 9 inches (227 mm) long, about 2-2.25 inches (51-57 mm) wide and about 0.25 inch (6.4) thick were attached by the adhesive portion thereon to a portion of an inner surface 153 of the trough-shaped preform 150, thereby extending the length of each side of the "V"-shaped preform by about 1.75-2.0 inches (45-51 mm). A slurry mixture comprised by weight of about 5 parts BLUONIC® A colloidal alumina (West Bond Corp., Wilmington, DE) and about 2 parts -325 mesh (particle diameter less than about 45 $\mu$m) wollastonite (a calcium silicate) was made by hand mixing the materials together.

A shell 154 was formed by painting the slurry mixture onto the outer surface 161 of the wax extension 152 and the outer surface 151 of the wax coated trough-shaped preform with a one inch foam brush. Coarse wollastonite was then sprinkled liberally onto the slurry mixture to prevent runoff and to form a first precursor layer of the shell 154. This procedure was repeated after an about 0.5 hour drying period. When the slurry mixture/coarse wollastonite layers reached a thickness of about 0.25 inch (6.4 mm), the wax coated trough-shaped preform 150 was dried at about room temperature for about 24 hours. The about 0.25 inch (6.4 mm) thick coating nominally comprised about 12 slurry mixture/coarse wollastonite layers. The substantially dry wax coated trough-shaped preform was placed into an air atmosphere furnace, which was maintained under an exhaust hood, and the furnace and its contents were heated to about 120°C and held at that temperature for about 6 hours, during which time the wax melted leaving behind an unfired precursor to the shell 154. The furnace and its contents were then heated to about 950°C in about 2 hours and held at about 950° for about 4 hours to substantially completely remove any residual wax and ensure the sintering of the colloidal alumina and wollastonite, thereby forming the shell 154. The furnace and its contents were then cooled to about room temperature.

About 40 grams of VASELINE® petroleum jelly vehicle (Cheseborough Ponds, Inc., Greenwich, CT) were placed into a small aluminum weighing dish and heated on a hot plate set at medium heat until the jelly turned into a liquid. A clean sable brush was then used to substantially completely coat the inner surface 153 of the trough-shaped preform 154 to provide an interface for the application of a nickel oxide powder mixture 155. Specifically, a mixture 155 comprising about 8 grams of -325 mesh (particle diameter less than about 45 $\mu$m) nickel oxide powder and about 16 grams of ethanol was applied with a sponge brush to substantially completely cover the petroleum jelly coated surface to form a growth lay-up. The growth lay-up comprising the wollastonite shell 154 containing the trough-shaped preform 150 was placed into a refractory container 156 such that opposite longitudinal ends of the wollastonite shell 154 on the outer surface of the preform 150 were supported by two partially hollowed-out fire bricks 157 (i.e., cavities were created in each of the two fire bricks so as to be complementary to each longitudinal end of the wollastonite shell 154) all of which were surrounded by a wollastonite bedding 158.

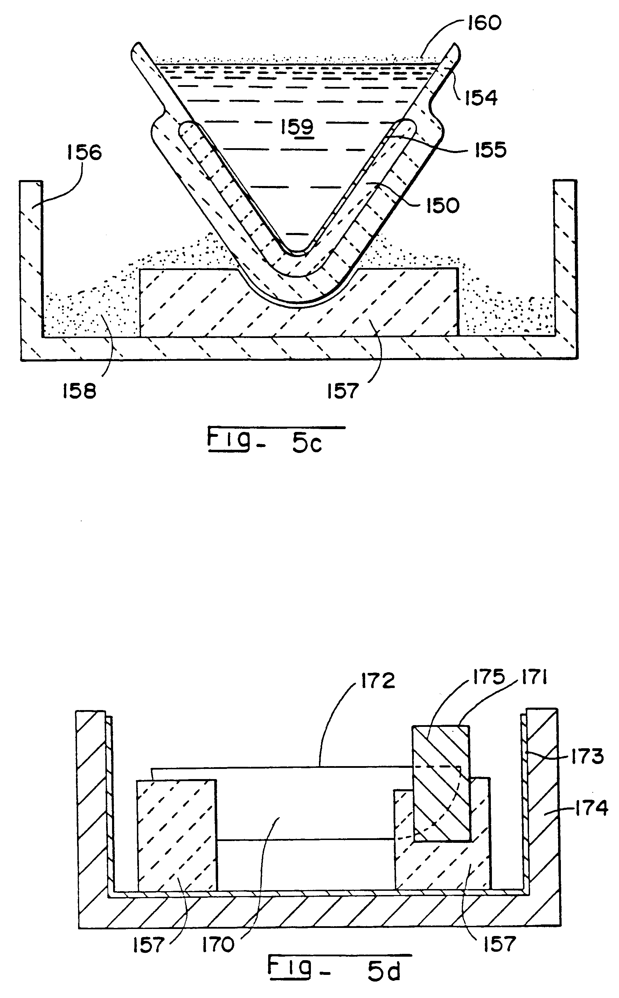

The refractory boat and its contents were then placed into a resistance heated air atmosphere furnace and heated from about room temperature to about 700°C. Simultaneously about 800 grams of a parent metal was melted, the parent metal comprising by weight about 9.5 to 11 percent silicon, 3.0 to 4.0 percent copper, 2.7 to 3.5 percent zinc, 0.2 to 0.3 percent magnesium, < 0.01 percent calcium, < 0.10 titanium, 0.7 to 1.0 percent iron, < 0.5 percent nickel, < 0.5 percent manganese, < 0.35 percent tin, < 0.001 percent beryllium, < 0.15 percent lead, and the balance aluminum. At about 700°C, the molten parent metal 159 was poured into the cavity of the trough-shaped preform 150 to substantially completely fill the cavity, as shown in Figure 5c. Then, wollastonite powder 160 was poured onto the surface of the molten parent metal 159 and the furnace door was closed. Figure 5c is a cross-sectional schematic of the setup as contained in the furnace. The furnace and its contents were then heated from about 700°C to about 950°C at about 400°C per hour. After about 125 hours at about 950°C, the furnace and its contents were cooled from about 950°C to about 700°C at about 400°C per hour. At about 700°C, the furnace door was opened and the refractory boat 156 and its contents were removed. The wollastonite-coated trough-shaped preform 150 within the refractory boat 156 was then removed and residual parent metal 159 was decanted. The wollastonite shell 154 was then separated from the growth infiltrated trough-shaped preform 150 and the preform was buried underneath silica sand to cool the preform to about room temperature. At about room temperature, the trough-shaped preform 150 was removed from the sand and it was observed that oxidation reaction product had grown into and embedded the silicon carbide/boron nitride-coated NICALON™ silicon carbide harness satin weave fabric preform to form a ceramic composite body 170 comprising silicon carbide fiber reinforcement embedded by alumina oxidation reaction product. The surface of the ceramic composite body was then cleaned in a sandblaster.

Once the ceramic composite body 170 had been successfully manufactured, the metal removal was begun. Two filler material mixtures were made. A first filler material mixture 171 comprised by weight of about 10 percent -325 mesh (particle diameter less than 45 $\mu$m) magnesium powder (Reade Manufacturing Co., Lakehurst, NJ) and about 90 percent E67 1000 grit (average particle diameter of about 5 $\mu$m) alumina (Norton Company, Worcester, MA) was combined in a plastic jar with alumina milling balls and the plastic jar and its contents were placed on a rotating jar mill to substantially completely mix the filler material mixture. A second filler material mixture 172 comprised by weight of about 10% -325 mesh (particle diameter less than about 45 $\mu$m) magnesium powder (Reade Manufacturing Company, Lakehurst, NJ) and about 90% silicon nitride (Grade LC 12 SX having a particle diameter less than about 0.5 $\mu$m and obtained from Hermann C. Stark, New York, NY) were combined in a plastic jar and placed on a rotating jar mill and substantially completely mix the filler material mixture.

The ceramic composite body 170 was placed into a graphite foil 173 lined graphite boat 174 and supported by two fire bricks 157, as depicted in Figure 5d. The silicon nitride/magnesium filler material mixture 172 was then packed into the inner cavity of the ceramic composite body 170. A graphite foil box 175 was constructed around one end of the ceramic composite body 170 and filler material mixture 171 comprised of alumina and magnesium was poured into the space between the ceramic composite body 172 and the graphite foil box 175. The graphite boat 174 and its contents were then placed into a controlled atmosphere resistance heated furnace and the furnace was sealed. After the furnace and its contents had been evacuated to about 30 inches (762 mm) of mercury (Hg) vacuum, nitrogen was introduced into the furnace chamber at about 6 liters per minute. The furnace and its contents were then heated from about room temperature to about 750°C in about 4 hours while maintaining a nitrogen flow rate of about 6000 sccm. After about 5 hours at about 750 with a nitrogen flow rate of about 6000 sccm, the furnace and its contents were cooled to about room temperature in about 4 hours. At about room temperature, the nitrogen flow rate was interrupted and the furnace was opened and the graphite boat 174 and its contents were removed. After disassembling the graphite boat and its contents, it was revealed that the metallic silicon carbide/boron nitride-coated silicon carbide fiber reinforced alumina composite body 170 had experienced a weight loss of about 5.63 percent.

The ceramic composite body, after cleaning by sandblasting, was then subjected to machining and it was noted that some isolated metallic channels of the fiber reinforced ceramic composite body had been exposed.

A second metal removal process was then performed. Specifically, the silicon nitride/magnesium filler material mixture was placed into the bottom of a graphite foil lined 173 stainless steel boat 180 and the ceramic composite body 170 was placed onto the silicon nitride/magnesium filler material mixture 172. Additional filler material mixture 172 was then poured into the graphite foil-lined stainless steel boat 180 and around the ceramic composite body 170 to substantially completely surround the ceramic composite body 170. The stainless steel boat 180 and its contents were then placed into a controlled atmosphere furnace and the furnace door was closed. After the furnace and its contents had been evacuated to about 30 inches (762 mm) of mercury (Hg) vacuum, nitrogen was introduced into the furnace chamber at a flow rate of about 7000 sccm. The furnace and its contents were then heated from about room temperature to about 750°C in about 4 hours while maintaining a nitrogen flow rate of about 7000 sccm. After about 5 hours at about 750°C with a nitrogen flow rate of about 7000 sccm, the furnace and its contents were cooled to about room temperature in about 4 hours. At about room temperature, the nitrogen flow rate was interrupted and the furnace was opened and the stainless steel boat 180 and its contents were removed. After disassembling the stainless steel boat and its contents, it was revealed that the freshly exposed metallic constituent of the silicon carbide reinforced composite body 170 had been substantially completely removed without substantially affecting the machined surface finish.

32

## TABLE I

| Sample Condition | Test Temp. | Number of Samples Tested | Average Strength (MPa) | Max. Strength (MPa) | Min. Strength (MPa) |
|---|---|---|---|---|---|
| Metallic constituent removed | Room temp. | 8 | 461 ± 28 | 511 | 438 |
| Metallic constituent removed | 1200°C | 10 | 488 ± 22 | 517 | 440 |
| Metallic constituent removed | 1300°C | 4 | 400 ± 12 | 412 | 386 |
| Metallic constituent removed | 1400°C | 4 | 340 ± 11 | 348 | 325 |
| Metallic constituent removed and heat treated at 1200°C in air for 24 h. | Room temp. | 3 | 288 ± 21 | 302 | 264 |
| Metallic constituent removed and heat treated at 1200°C in air for 24 h. | 1200°C | 3 | 397 ± 9 | 404 | 387 |
| Metallic constituent removed and heat treated at 1200°C in air for 100 h. | Room temp. | 3 | 265 ± 12 | 275 | 253 |
| Metallic constituent removed and heat treated at 1200°C in air for 100 h. | 1200°C | 3 | 401 ± 28 | 433 | 379 |

EP 0 567 603 B1

## TABLE II

| Sample ID | Composite | Geometry | Filler Material For Metal Removal | Infiltration Enhancer Precursor | Processing Temperature | Processing Time At Processing Temperature | Atr |
|-----------|-----------|----------|-----------------------------------|---------------------------------|------------------------|-------------------------------------------|-----|
| A | $SiC_f/Al_2O_3$[7] | bar | 1000 grit $[Al_2O_3]$ $Al_2O_3$[2] | 10% -325 mesh Mg[3] | 850°C | 10h | |
| B | $SiC_f/AlN$[7] | irregular | 1000 grit $[Al_2O_3]$ $Al_2O_3$[2] | 10% -325 mesh Mg[3] | 750°C | 10h | |

2   E67 tabular alumina, Norton Co., Worcester, MA.
3   AESAR®, Johnson Matthey Corporation, Seabrook, New Hampshire
7   NICALON™ silicon carbide fiber (obtained from Dow Corning Corporation, Midland, MI) reinforced composite.

## TABLE III

### Four Point Flexural Strengths (MPa)

| Sample ID | Condition | Composite | Flexural Strength Test Temp. | Average Flexural Strength (MPa) | Std. Dev. Strength (MPa) |
|-----------|-----------|-----------|------------------------------|---------------------------------|--------------------------|
| C | As grown | $SiC_f/Al_2O_3$[7] | Room Temperature | 469 | 49 |
| D | As grown | $SiC_f/Al_2O_3$[7] | 1000°C | 344 | 11 |
| E | As grown | $SiC_f/Al_2O_3$[7] | 1200°C | 252 | 29 |
| F | metallic constituent removed | $SiC_f/Al_2O_3$[7] | Room Temperature | 480 | 30 |
| G | metallic constituent removed | $SiC_f/Al_2O_3$[7] | 1000°C | 407 | 26 |
| H | metallic constituent removed | $SiC_f/Al_2O_3$[7] | 1200°C | 347 | 63 |

7 12 harness satin weave fabric comprising NICALON™ silicon carbide fibers obtained from Dow Corning Corporation, Midland, Michigan

EP 0 567 603 B1

TABLE IV

| Sample ID | Sample Condition | Test Temp. | Average Flexural Strength (MPa) | Maximum Flexural Strength (MPa) | Average Fracture Toughness (MPa-m$^{1/2}$) |
|---|---|---|---|---|---|
| I | As Grown | RT | -- | -- | 19 ± 1 |
| J | Metallic constituent removed | RT | 450 (31)* | 563 | 21 ± 1 |
| K | Metallic constituent removed | 1000°C | 400 (7)* | 432 | 23 ± 1 |
| L | Metallic constituent removed | 1200°C | 350 (14)* | 406 | 18 ± 1 |

*The number in parentheses indicates the number of sample test.

## Claims

1. A method for removing at least one metallic component of a metallic constituent contained within a coated-fiber reinforced ceramic matrix coposite body, comprising:

EP 0 567 603 B1

contacting at least a portion of a least one surface of said coated-fiber reinforced ceramic matrix composite body with a permeable mass comprising at least one material selected from the group consisting of a filler material and a preform; and

spontaneously infiltrating, without the application of externally applied or internally created pressure or vacuum, at least a portion of the permeable mass with at least one metallic component of a metallic constituent of the fiber reinforced ceramic matrix composite body, thereby reducing the amount of said at least one metallic component in the fiber reinforced ceramic matrix composite body.

2. A method for removing at least one metallic component of a metallic constituent contained within a coated-fiber reinforced ceramic matrix composite body, comprising:

placing a coated-fiber reinforced ceramic matrix composite body comprising at least three phases, said at least three phases comprising (1) at least one metallic component, (2) at least one oxidation reaction product and (3) at least one coated fiber reinforcement, into contact with a permeable mass, said permeable mass comprising at least one material selected from the group consisting of a filler material and a preform, said permeable mass contacting at least a portion of at least one surface of the fiber reinforced ceramic matrix composite body;

communicating at least one of an infiltration enhancer and an infiltration enhancer precursor with at least one of the metallic component of the fiber reinforced ceramic matrix composite body, said permeable mass, said at least a portion of at least one surface and an infiltrating atmosphere, to cause, without the requirement for the application of pressure or vacuum, spontaneous infiltration of said at least one metallic component into the permeable mass to occur; and

spontaneously infiltrating at least a portion of the permeable mass with molten metallic component.

3. A method for making a ceramic matrix composite body having reduced metal content and reinforced by coated fibers, comprising:

placing at least a duplex coating onto at least a portion of at least one fiber reinforcement, thereby forming coated fibers;

positioning a parent metal adjacent to said at least one fiber reinforcement so that formation of oxidation reaction product will occur in a direction towards and into said fiber reinforcement;

heating said parent metal to render it molten and reacting the molten parent metal with an oxidant to form oxidation reaction product and causing continued oxidation reaction product to grow into the fiber reinforcement;

continuing formation of oxidation reaction product for a time sufficient to embed at least a portion of the fiber reinforcment, thereby forming a fiber reinforced ceramic matrix composite body comprising at least some interconnected metallic component;

contacting at least a portion of at least one surface of the formed fiber reinforced ceramic matrix composite body with a permeable mass comprising at least one material selected from the group consisting of a filler material and a preform; and

spontaneously infiltrating, without the application of externally applied or internally created pressure or vacuum, at least a portion of the permeable mass with said at least some metallic component in said formed fiber reinforced ceramic matrix composite body, thereby reducing the amount of said at least one metallic component in said formed fiber reinforced ceramic matrix composite body.

4. The method of any one of claims 1 - 3, wherein said permeable mass: (1) substantially completely surrounds said fiber reinforced ceramic matrix composite body or (2) contacts substantially only one side of said composite body.

5. The method of any one of claims 1 - 4, wherein said coated fiber(s) comprises at least one ceramic fiber.

6. The method of claim 5, wherein said coated fiber(s) comprises at least one material selected from the group consisting of silicon carbide fibers, silicon carbide-based fibers, alumina fibers, alumina-based fibers, carbon fibers and carbon-based fibers.

7. The method of any one of claims 1 - 6, wherein said coated fiber(s) are coated by a chemical vapor infiltration process.

37

8. The method of claim 7, wherein said chemical vapor infiltration deposits at least two coatings on said coated fiber(s), said at least two coatings being selected from the group of coatings consisting of boron nitride, silicon carbide, titanium carbide, silicon nitride, iridium, niobium and platinum.

9. The method of any one of claims 1 - 8, wherein: (1) said coated fiber(s) comprises silicon carbide fibers and said coating comprises at least one coating system selected from the group consisting of boron nitride/silicon carbide, titanium carbide/silicon nitride and carbon/silicon carbide; or (2) said coated fiber-(s) comprises carbon fibers and said coating comprises carbon/silicon carbide; or (3) said coated fiber-(s) comprises alumina or alumina-based fibers and said at least a duplex coating comprises at least one coating system selected from the group consisting of iridium/silicon carbide, niobium/silicon carbide, platinum/silicon carbide, platinum/boron nitride/silicon carbide.

10. The method of any one of claims 1 - 8, wherein the coating on said coated fiber(s) comprises (1) a duplex combination of coatings selected from the group consisting of metal oxides, metal nitrides, metal borides, metal carbides, alkaline metal salts, alkaline earth metal salts, carbon, and silicon; or (2) a duplex combination of coatings selected from the group consisting of titanium carbide, silicon, calcium silicate, calcium sulfate, and carbon as inner coatings, and silicon, silica, alumina, zirconia, zirconium nitride, titanium nitride, aluminum nitride, and silicon nitride as outer coatings; or (3) a combination of coatings selected to provide adequate mismatch and bonding strengths so as to allow for debonding and pullout of said fibrous material from said oxidation reaction product; or (4) a duplex combination of coatings which provides protection against degradation of said fibrous material and an outer coating selected to protect an inner coating from degradation or corrosion in high temperature, oxidizing environments.

11. The method of any one of claims 1 - 10, wherein the coating on said coated fiber(s) comprises a first coating and an outer coating, wherein said coatings are selected to provide an adequate mismatch and interfacial shear strength so that at least one zonal junction is weak relative to any remaining zonal junctions to provide relevant movement between the first coating and the fibrous materials or between the first coatings and the outer coatings, or between the outer coating and the adjacent ceramic matrix.

12. The method of any one of claims 1 - 11, wherein said coated fiber(s) comprises at least one fiber material having a relatively high length to diameter ratio, preferably a length to diameter ratio of at least about 2:1, and more preferably a length to diameter ratio of at least about 3:1.

13. The method of any one of claims 1 - 12, wherein the coating on said coated fiber(s) comprises a coating which is sufficiently thick to completely cover any irregularities on a surface of said fibrous material, and wherein when the coating comprises a duplex coating, each coating of said duplex coating comprises a coating having a thickness from about 0.05 to about 25 $\mu$m, and preferably each having a thickness of about 10 $\mu$m.

14. The method of any one of claims 1 - 13, wherein the coating on said coated fiber(s) comprises a coating having a cumulative thickness of (1) from about 2 $\mu$m to about 10 $\mu$m and not greater than about 25 $\mu$m.

15. The method of any one of claims 1 - 14, wherein said coated fiber(s) comprise at least one harness satin weave fabric, wherein said harness satin weave comprises: (1) a 12 harness satin weave; or (2) an 8 harness satin weave; or (3) the like.

16. The method of claim 7, wherein said chemical vapor infiltration process comprises forming a first coating comprising boron nitride from a gas mixture comprising boron chloride and ammonia and a second coating comprising silicon carbide from a gas mixture comprising hydrogen and methyltrichlorosilane, wherein in a preferred embodiment a volumetric flow rate ratio of boron chloride to ammonia comprises about 2:3, and in a more preferred embodiment said boron nitride is formed at about 730°C from a flowing boron chloride ammonia gas mixture at a total pressure of about 160-173.3 Pa (1.2-1.3 Torr), and in a more preferred embodiment said silicon carbide coating is formed from a gas mixture comprising hydrogen and methyltrichlorosilane at a temperature of about 925°C.

EP 0 567 603 B1

**Patentansprüche**

1. Verfahren zur Entfernung von wenigstens einer metallischen Komponente eines metallischen Bestandteils, der in einem mit beschichteten Fasern verstärkten Keramikmatrix-Verbundkörpers enthalten ist, das umfaßt:

   Inkontaktbringen wenigstens eines Teils wenigstens einer Oberfläche des mit beschichteten Fasern verstärkten Keramikmatrix-Verbundkörpersmit einer permeablen Masse, die wenigstens ein Material aufweist, das aus der Gruppe ausgewählt ist, die aus einem Füllstoffmaterial und einer Vorform besteht; und

   ohne die Anwendung von von außen einwirkendem oder intern erzeugtem Druck oder Vakuum spontanes Infiltrieren wenigstens eines Teils der permeablen Masse mit wenigstens einer metallischen Komponente eines metallischen Bestandteils des faserverstärkten Keramikmatrix-Verbundkörpers, wodurch die Menge der genannten wenigstens einen metallischen Komponente in dem faserverstärkten Keramikmatrix-Verbundkörper vermindert wird.

2. Verfahren zur Entfernung von wenigstens einer metallischen Komponente eines metallischen Bestandteils, der innerhalb eines mit beschichteten Fasern verstärkten Keramikmatrix-Verbundkörpers enthalten ist, das umfaßt:

   Anordnen eines mit beschichteten Fasern verstärkten Keramikmatrix-Verbundkörpers, der wenigstens drei Phasen aufweist, wobei diese drei Phasen umfassen

   (1) wenigstens eine metallische Komponente,
   (2) wenigstens ein Oxidationsreaktionsprodukt und
   (3) wenigstens eine Verstärkung mit beschichteten Fasern,

   im Kontakt mit einer permeablen Masse, wobei die genannte permeable Masse wenigstens ein Material umfaßt, das aus der Gruppe ausgewählt ist, die aus einem Füllstoffmaterial und einer Vorform besteht, wobei die genannte Masse mit wenigstens einem Teil wenigstens einer Oberfläche des faserverstärkten Keramikmatrix-Verbundkörpers in Kontakt ist;

   Einwirkenlassen von wenigstens einem von einem Infiltrationsverstärker und einem Infiltrationsverstärker-Vorläufer auf wenigstens einen der Bestandteile Metallkomponente des faserverstärkten Keramikmatrix-Verbundkörpers, permeable Masse, wenigstens ein Teil der genannten wenigstens einen Oberfläche und Infiltrationsatmosphäre, um ohne das Erfordernis einer Anwendung von Druck oder Vakuum die spontane Infiltration von wenigstens einer metallischen Komponente in die permeable Masse zu bewirken; und

   spontanes Infiltrieren von wenigstens einem Teil der permeablen Masse mit schmelzflüssiger metallischer Komponente.

3. Verfahren zur Herstellung eines Keramikmatrix-Verbundkörpers, der einen verminderten Metallgehalt aufweist und durch beschichtete Fasern verstärkt ist, das umfaßt:

   Anordnen wenigstens einer Duplex-Beschichtung auf wenigstens einem Teil wenigstens einer Faserverstärkung, wodurch beschichtete Fasern gebildet werden;

   Anordnen eines Grundmetalls angrenzend an die genannte wenigstens eine Faserverstärkung, so daß eine Bildung eines Oxidations-Reaktionsprodukts in eine Richtung auf die Faserverstärkung zu und in diese hinein erfolgt;

   Erhitzen des genannten Grundmetalls, um es aufzuschmelzen, und Umsetzen des schmelzflüssigen Grundmetalls mit einem Oxidationsmittel, um ein Oxidations-Reaktionsprodukt zu bilden, und Bewirken, daß das Oxidations-Reaktionsprodukt fortgesetzt in die Faserverstärkung hineinwächst;

   Fortsetzen der Bildung des Oxidations-Reaktionsprodukts für einen Zeitraum, der ausreicht, wenigstens einen Teil der Faserverstärkung einzubetten, wodurch ein faserverstärkter Keramikmatrix-Verbundkörper gebildet wird, der wenigstens einen gewissen Anteil an untereinander in Verbindung stehender metallischer Komponente aufweist;

   Inkontaktbringen wenigstens eines Teils von wenigstens einer Oberfläche des gebildeten faserverstärkten Keramikmatrix-Verbundkörpers mit einer permeablen Masse, die wenigstens ein Material aufweist, das aus der Gruppe ausgewählt ist, die aus einem Füllstoffmaterial und einer Vorform besteht; und

   spontanes Infiltrieren, ohne Anwendung von von außen angelegtem oder intern erzeugtem Druck oder Vakuum von wenigstens einem Teil der permeablen Masse mit der genannten wenigstens etwas Metallkomponente in dem genannten gebildeten faserverstärkten Keramikmatrix-Verbundkörper, wodurch die Menge der genannten wenigstens einen metallischen Komponente in dem genannten

39

gebildeten faserverstärkten Keramikmatrix-Verbundkörper vermindert wird.

4. Verfahren nach irgendeinem der Ansprüche 1 bis 3, bei dem die genannte permeable Masse (1) im wesentlichen vollständig den genannten faserverstärkten Keramikmatrix-Verbundkörper umgibt oder (2) im wesentlichen nur mit einer Seite des genannten Verbundkörpers im Kontakt steht.

5. Verfahren nach irgendeinem der Ansprüche 1 bis 4, bei dem die genannten beschichteten Fasern wenigstens eine Keramikfaser umfassen.

6. Verfahren nach Anspruch 5, bei dem die genannten beschichteten Fasern wenigstens ein Material umfassen, das aus der Gruppe ausgewählt ist, die aus Siliciumcarbidfasern, Fasern auf Siliciumcarbidbasis, Aluminiumoxidfasern, Fasern auf Aluminiumoxidbasis, Kohlenstoff-Fasern und Fasern auf Kohlenstoffbasis besteht.

7. Verfahren nach irgendeinem der Ansprüche 1 bis 6, bei dem die genannten beschichteten Fasern nach einem chemischen Dampfinfiltrationsverfahren beschichtet sind.

8. Verfahren nach Anspruch 7, bei dem die genannte chemische Dampfinfiltration wenigstens zwei Überzüge auf den genannten beschichteten Fasern abscheidet, wobei die genannten wenigstens zwei Überzüge aus der Gruppe von Überzügen ausgewählt sind, die aus Bornitrid, Siliciumcarbid, Titancarbid, Siliciumnitrid, Iridium, Niob und Platin besteht.

9. Verfahren nach irgendeinem der Ansprüche 1 bis 8, bei dem: (1) die genannten beschichteten Fasern Siliciumcarbidfasern umfassen und die genannte Beschichtung wenigstens ein Beschichtungssystem umfaßt, das aus der Gruppe ausgewählt ist, die aus Bornitrid/Siliciumcarbid, Titancarbid/Siliciumnitrid und Kohlenstoff/Siliciumcarbid besteht; oder (2) die genannten beschichteten Fasern Kohlenstoff-Fasern umfassen und die genannte Beschichtung Kohlenstoff/Siliciumcarbid umfaßt; oder (3) die genannten beschichteten Fasern Aluminiumoxidfasern oder Fasern auf Aluminiumoxidbasis umfassen und die genannte wenigstens eine Duplex-Beschichtung wenigstens ein Beschichtungssystem umfaßt, das aus der Gruppe ausgewählt ist, die aus Iridium/Siliciumcarbid, Niob/Siliciumcarbid, Platin/Siliciumcarbid, Platin/Bornitrid/Siliciumcarbid besteht.

10. Verfahren nach irgendeinem der Ansprüche 1 bis 8, bei dem die Beschichtung auf den genannten beschichteten Fasern umfaßt (1) eine Duplex-Kombination von Beschichtungen, die aus der Gruppe ausgewählt sind, die aus Metalloxiden, Metallnitriden, Metallboriden, Metallcarbiden, Alkalimetallsalzen, Erdalkalimetallsalzen, Kohlenstoff und Silicium besteht; oder (2) eine Duplex-Kombination von Beschichtungen, die aus der Gruppe ausgewählt sind, die aus Titancarbid, Silicium, Calciumsilikat, Calciumsulfat und Kohlenstoff als innere Beschichtungen und Silicium, Siliciumdioxid, Aluminiumoxid, Zirkoniumoxid, Zirkoniumnitrid, Titannitrid, Aluminiumnitrid und Siliciumnitrid als äußere Beschichtungen besteht; oder (3) eine Kombination von Beschichtungen, die so ausgewählt sind, daß adequate Unverträglichkeiten und Bindungsfestigkeiten gewährleistet werden, so daß ein Bindungsversagen und ein Auszug des genannten faserigen Materials aus dem genannten Oxidations-Reaktionsprodukt ermöglicht wird; oder (4) eine Duplex-Kombination von Beschichtungen, die Schutz gegen den Abbau des genannten Fasermaterials bietet sowie eine äußere Beschichtung, die ausgewählt ist, um eine innere Beschichtung gegen einen Abbau oder eine Korrosion in oxidierenden Hochtemperaturumgebungen zu schützen.

11. Verfahren nach irgendeinem der Ansprüche 1 bis 10, bei dem die Beschichtung der genannten beschichteten Fasern eine erste Beschichtung und eine äußere Beschichtung umfaßt, wobei die genannten Beschichtungen so ausgewählt sind, daß eine adequate Unverträglichkeit und eine Grenzflächen-Scherfestigkeit gewährleistet werden, so daß wenigstens eine Zonenverbindung relativ zu irgendwelchen verbliebenen Zonenverbindungen schwach ist, so daß eine relevante Bewegung zwischen der ersten Beschichtung und dem Fasermaterial oder zwischen der ersten Beschichtung und der äußeren Beschichtung oder zwischen der äußeren Beschichtung und der angrenzenden Keramikmatrix erhalten wird.

12. Verfahren nach irgendeinem der Ansprüche 1 bis 11, bei dem die genannten beschichteten Fasern wenigstens ein Fasermaterial umfassen, das ein relativ hohes Verhältnis von Länge zu Durchmesser aufweist, vorzugsweise ein Verhältnis von Länge zu Durchmesser von wenigstens etwa 2:1 und stärker bevorzugt ein Verhältnis von Länge zu Durchmesser von wenigstens etwa 3:1.

13. Verfahren nach irgendeinem der Ansprüche 1 bis 12, bei dem die Beschichtung auf den genannten beschichteten Fasern eine Beschichtung umfaßt, die ausreichen dick ist, um mögliche Unebenheiten auf einer Oberfläche des genannten Fasermaterials vollständig zu bedecken, und wobei dann, wenn die Beschichtung eine Duplex-Beschichtung umfaßt, jede Beschichtung der genannten Duplex-Beschichtung eine Beschichtung umfaßt, die eine Dicke von etwa 0,05 bis etwa 25 $\mu$m aufweist, wobei vorzugsweise beide eine Dicke von etwa 10 $\mu$m aufweisen.

14. Verfahren nach irgendeinem der Ansprüche 1 bis 13, bei dem die Beschichtung auf den genannten beschichteten Fasern eine Beschichtung mit einer kumulativen Dicke von (1) von etwa 2 $\mu$m bis 10 $\mu$m und von nicht mehr als etwa 25 $\mu$m aufweist.

15. Verfahren nach irgendeinem der Ansprüche 1 bis 14, bei dem die genannten beschichteten Fasern wenigstens ein Harnisch-Atlasbindungs-Gewebe umfassen, wobei die genannte Harnisch-Atlasbindung umfaßt (1) eine 12er-Harnisch-Atlasbindung; oder (2) eine 8er-Harnisch-Atlasbindung; oder (3) etwas derartiges.

16. Verfahren nach Anspruch 7, bei dem das genannte chemische Dampfinfiltrationsverfahren die Bildung einer ersten Beschichtung, die Bornitrid umfaßt, aus einer Gasmischung, die Borchlorid und Ammoniak umfaßt, sowie einer zweiten Beschichtung, die Siliciumcarbid umfaßt, aus einer Gasmischung, die Wasserstoff und Methyltrichlorsilan umfaßt, umfaßt, wobei gemäß einer bevorzugten Ausführungsform ein Verhältnis der Volumen-Durchflußgeschwindigkeit von Borchlorid zu Ammoniak von etwa 2:3 gewählt wird, und bei einer stärker bevorzugten Ausführungsform das genannte Bornitrid bei etwa 730°C aus einer strömenden Borchlorid-Ammoniak-Gasmischung bei einem Gesamtdruck von etwa 160 bis 173.3 Pa (1,2 bis 1,3 Torr) gebildet wird, und wobei in einer stärker bevorzugten Ausführungsform die genannte Siliciumcarbid-Beschichtung aus einer Gasmischung, die Wasserstoff und Methyltrichlorsilan enthält, bei einer Temperatur von etwa 925°C gebildet wird.

**Revendications**

1. Procédé pour enlever au moins un composant métallique d'un constituant métallique contenu dans un corps composite à matrice céramique renforcé par des fibres portant un revêtement, comprenant les opérations qui consistent :
   la mise en contact d'au moins une partie d'au moins une surface du corps composite à matrice céramique renforcé par des fibres portant un revêtement avec une masse perméable comprenant au moins une matière choisie dans le groupe consistant en une charge et une préforme ; et
   à imprégner spontanément, sans l'aide d'une pression ou d'un vide d'origine externe ou interne, une partie au moins de la masse perméable d'au moins un composant métallique d'un constituant métallique du corps composite à matrice céramique renforcé par des fibres, en réduisant ainsi la quantité du composant métallique dont au moins un est présent dans le corps composite à matrice céramique renforcé par des fibres.

2. Procédé pour enlever au moins un composant métallique d'un constituant métallique contenu dans un corps composite à matrice céramique renforcé par des fibres portant un revêtement, comprenant :
   la mise en contact d'un corps composite à matrice céramique renforcé par des fibres portant un revêtement, comprenant au moins trois phases, ces phases au nombre de trois au moins comprenant (1) au moins un composé métallique, (2) au moins un produit de réaction d'oxydation et (3) au moins une armature de fibres portant un revêtement, avec une masse perméable, cette masse perméable comprenant au moins une matière choisie dans le groupe consistant en une charge et une préforme, cette masse perméable étant au contact d'au moins une partie d'au moins une surface du corps composite à matrice céramique renforcé par des fibres ;
   la mise en communication de l'un au moins d'un agent favorisant l'infiltration et d'un précurseur d'agent favorisant l'infiltration avec l'un au moins du composant métallique du corps composite à matrice céramique renforcé par des fibres, de la masse perméable et d'au moins une partie d'au moins une surface d'une atmosphère d'infiltration, pour que se produise, sans nécessiter l'application d'une pression ou la création d'un vide, l'infiltration spontanée du composant métallique ayant au moins un représentant dans la masse perméable ; et

l'infiltration spontanée du composant métallique en fusion dans au moins une partie de la masse perméable.

3. Procédé de production d'un corps composite à matrice céramique ayant une teneur en métal réduite et renforcé par des fibres revêtues, comprenant :

la mise en place d'au moins un revêtement double sur au moins une partie d'au moins une armature de fibres, de manière à former des fibres revêtues ;

le positionnement d'un métal-mère en contiguïté avec l'armature de fibres dont au moins une est présente de manière que la formation du produit de réaction d'oxydation ait lieu en direction de cette armature de fibres et pénètre dans cette armature ;

le chauffage du métal-mère pour le faire fondre et la réaction du métal-mère fondu avec un oxydant pour former un produit réactionnel d'oxydation et pour amener le produit réactionnel d'oxydation continu à croître dans l'armature de fibres ;

à poursuivre la formation du produit réactionnel d'oxydation pendant une durée suffisante pour enrober au moins une partie de l'armature de fibres, de manière à former un corps composite à matrice céramique renforcé par des fibres comprenant au moins certains composants métalliques interconnectés ;

la mise en contact d'au moins une partie d'au moins une surface du corps composite à matrice céramique renforcé par des fibres ainsi formé avec une masse perméable comprenant au moins une matière choisie dans le groupe consistant en une charge et en une préforme ; et

l'infiltration spontanée, sans l'aide d'une pression ou d'un vide d'origine externe ou d'origine interne, dans au moins une partie de la masse perméable, du composé métallique représenté par au moins un métal dans le corps composite à matrice céramique renforcé par des fibres qui est formé, afin de réduire ainsi la quantité du composant métallique représenté par au moins un métal dans le corps composite à matrice céramique renforcé par des fibres qui est formé.

4. Procédé suivant l'une quelconque des revendications 1 à 3, dans lequel la masse perméable (1) entoure à peu près complètement le corps composite à matrice céramique renforcé par des fibres ou (2) n'est sensiblement en contact qu'avec un côté de ce corps composite.

5. Procédé suivant l'une quelconque des revendications 1 à 4, dans lequel la fibre ou les fibres revêtues comprennent au moins une fibre céramique.

6. Procédé suivant la revendication 5, dans lequel la fibre ou les fibres revêtues en question comprennent au moins une matière choisie dans le groupe consistant en fibres de carbure de silicium, fibres à base de carbure de silicium, fibres d'alumine, fibres à base d'alumine, fibres de carbone, fibres à base de carbone.

7. Procédé suivant l'une quelconque des revendications 1 à 6, dans lequel la fibre ou les fibres revêtues sont munies de leur revêtement par un procédé chimique d'infiltration de vapeur.

8. Procédé suivant la revendication 7, dans lequel l'infiltration chimique de vapeur dépose au moins deux revêtements sur la fibre ou les fibres revêtues, ces revêtements au nombre au nombre de deux au moins étant choisis dans le groupe de revêtements consistant en nitrure de bore, carbure de silicium, carbure de titane, nitrure de silicium, iridium, nobium, et platine.

9. Procédé suivant l'une quelconque des revendications 1 à 8, dans lequel : (1) la fibre ou les fibres revêtues comprennent des fibres de carbure de silicium et le revêtement en question comprend au moins un système de revêtement choisi dans le groupe consistant en nitrure de bore/carbure de silicium, carbure de titane/nitrure de silicium et carbone/carbure de silicium ; ou (2) la fibre ou les fibres revêtues comprennent des fibres de carbone et le revêtement en question comprend du carbone/carbure de silicium ; ou bien (3) la fibre ou les fibres revêtues comprennent des fibres d'alumine ou des fibres à base d'alumine et le double revêtement dont au moins un existe comprend au moins un système de revêtement choisi dans le groupe consistant en iridium/carbure de silicium, nobium/carbure de silicium, platine/carbure de silicium, platine/nitrure de bore/carbure de silicium.

**10.** Procédé suivant l'une quelconque des revendications 1 à 8, dans lequel le revêtement porté par la ou les fibres revêtues en question comprend (1) une double association de revêtements choisis dans le groupe consistant en oxydes métalliques, nitrures métalliques, borures métalliques, carbures métalliques, sels de métaux alcalins, sels de métaux alcalino-terreux, carbone et silicium ; ou (2) une double association de revêtements choisis dans le groupe consistant en carbure de titane, silicium, silicate de calcium, sulfate de calcium, et carbone comme revêtement interne, et silicium, silice, alumine, oxyde de zirconium, nitrure de zirconium, nitrure de titane, nitrure d'aluminium, nitrure de silicium, comme revêtements externes ; ou (3) une association de revêtements choisie de manière à permettre un défaut d'adaptation suffisant et des forces de liaisons adéquates de manière que les liaisons puissent être défaites et que la matière fibreuse puisse être tirée du produit réactionnel d'oxydation ; ou (4) une double association de revêtements offrant une protection entre la dégradation de la matière fibreuse et un revêtement externe choisi de manière à protéger un revêtement interne de la dégradation ou de la corrosion dans des environnements oxydants à haute température.

**11.** Procédé suivant l'une quelconque des revendications 1 à 10, dans lequel le revêtement porté par la fibre ou les fibres revêtues comprend un premier revêtement et un revêtement externe, ces revêtements étant choisis de manière à créer un défaut d'adaptation suffisant et une force interfaciale de cisaillement adéquate afin qu'au moins une jonction zonale soit faible par rapport à toutes les jonctions zonales restantes pour permettre un mouvement pertinent entre le premier revêtement et la matière fibreuse ou entre les premiers revêtements et les revêtements externes ou entre le revêtement externe et la matrice céramique contiguë.

**12.** Procédé suivant l'une quelconque des revendications 1 à 11, dans lequel la fibre ou les fibres revêtues comprennent au moins une matière fibreuse ayant un rapport longueur:diamètre relativement grand, avantageusement un rapport longueur:diamètre d'au moins d'environ 2:1 et de préférence un rapport longueur:diamètre d'au moins environ 3:1.

**13.** Procédé suivant l'une quelconque des revendications 1 à 12, dans lequel le revêtement porté par la ou les fibres revêtues comprend un revêtement qui est suffisamment épais pour recouvrir entièrement toutes irrégularités de la surface de la matière fibreuse, et dans lequel lorsque le revêtement comprend un revêtement double, chaque revêtement individuel de ce revêtement double comprend un revêtement ayant une épaisseur d'environ 0,05 à environ 25 $\mu$m et chacun ayant de préférence une épaisseur d'environ 10 $\mu$m.

**14.** Procédé suivant l'une quelconque des revendications 1 à 13, dans lequel le revêtement porté par la fibre ou les fibres revêtues comprend un revêtement ayant une épaisseur cumulative de (1) allant d'environ 2 $\mu$m à environ 10 $\mu$m et ne dépassant pas environ 25 $\mu$m.

**15.** Procédé suivant l'une quelconque des revendications 1 à 14, dans lequel la ou les fibres revêtues comprennent au moins une matière textile à armature satin à arcades, cette armure satin à arcades comprenant : (1) une armure satin à 12 arcades ; ou (2) une armure satin à 8 arcades ; ou (3) une armure similaire.

**16.** Procédé suivant la revendication 7, dans lequel l'opération d'infiltration chimique de vapeur comprend la formation d'un premier revêtement comprenant du nitrure de bore, à partir d'un mélange gazeux contenant du chlorure de bore et de l'ammoniac, et d'un second revêtement comprenant du carbure de silicium, à partir d'un mélange gazeux comprenant de l'hydrogène et du méthyltrichlorosilane, et dans lequel, dans une forme de réalisation appréciée, un rapport des débits volumétriques du chlorure de bore à l'ammoniac comprend une valeur d'environ 2:3, dans une forme de réalisation plus appréciée, le nitrure de bore est formé à environ 730°C à partir d'un courant de mélange gazeux de chlorure de bore et d'ammoniac se trouvant à une pression totale d'environ 160-173,3 Pa (1,2-1,3 torr) et dans une forme de réalisation appréciée, le revêtement de carbure de silicium est formé à partir d'un mélange gazeux comprenant de l'hydrogène et du méthyltrichlorosilane à une température d'environ 925°C.

Fig. 1a

Fig. 1b

44

Fig - 2

Fig- 3

Fig- 4a

Fig- 4b

Fig- 4c

Fig. 4d

107

104

105

106

103

104

107

108

Fig. 4e

111

Fig. 4f

109

110

Fig. 4g

Fig. 4h

Fig. 5a

Fig. 5b

Fig. 5c

Fig. 5d

Fig - 5e